(19) **Europäisches Patentamt / European Patent Office / Office européen des brevets**

(11) **EP 4 583 421 A1**

(12) **EUROPEAN PATENT APPLICATION**
published in accordance with Art. 153(4) EPC

(43) Date of publication:
**09.07.2025 Bulletin 2025/28**

(21) Application number: **23867382.6**

(22) Date of filing: **14.09.2023**

(51) International Patent Classification (IPC):
**H04B 7/0456** *(2017.01)* **H04W 72/21** *(2023.01)*

(52) Cooperative Patent Classification (CPC):
**H04B 7/0413; H04B 7/0456; H04W 72/21**

(86) International application number:
**PCT/CN2023/118738**

(87) International publication number:
**WO 2024/061093 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.09.2022 CN 202211168758**

(71) Applicant: **Huawei Technologies Co., Ltd.
Shenzhen, Guangdong 518129 (CN)**

(72) Inventors:
- XU, Jun
  **Shenzhen, Guangdong 518129 (CN)**
- JIN, Huangping
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **UPLINK PRECODING INDICATION METHOD AND COMMUNICATION APPARATUS**

(57) This application provides an uplink precoding indication method and a communication apparatus. The method includes: sending first indication information and third indication information when a quantity of uplink transmission layers of a terminal device is less than or equal to X; or sending first indication information, second indication information, and third indication information when a quantity of uplink transmission layers is greater than X, where the first indication information indicates an index of a first codeword in a first codebook and a quantity of uplink transmission layers of the first codeword, the second indication information indicates an index of a second codeword in the first codebook and a quantity of uplink transmission layers of the second codeword, the third indication information indicates that the quantity of uplink transmission layers of a terminal device is greater than X, and the second codeword and the first codeword have a same coherent capability. The sent indication information is used by the terminal device to determine an uplink precoding matrix, where X is any one of 1, 2, 3, and 4. According to the method, the uplink precoding matrix is adapted to more transmit antenna ports and more uplink transmission layers, so that uplink transmission performance can be effectively improved.

300

Network device — S310: Obtain a first codebook

S320: Generate first information based on the first codebook

S330: First information, where the first information indicates a predefined codeword and a first quantity of uplink transmission layers

Terminal device

S340: Determine a first uplink precoding matrix based on the first information

S350: Uplink data

FIG. 3

## Description

This application claims priority to Chinese Patent Application No. 202211168758.7, filed with the China National Intellectual Property Administration on September 24, 2022 and entitled "UPLINK PRECODING INDICATION METHOD AND COMMUNICATION APPARATUS", which is incorporated herein by reference in its entirety.

## TECHNICAL FIELD

This application relates to the field of wireless communication technologies, and more specifically, to an uplink precoding indication method and a communication apparatus.

## BACKGROUND

A 5th generation (5th generation, 5G) mobile communication system has higher requirements on a system capacity, spectral efficiency, and the like. In the 5G communication system, application of a massive multiple-input multiple-output (massive multiple-input multiple-output, massive-MIMO) technology plays a crucial role in improving the spectral efficiency of the system. Based on the massive-MIMO technology, when sending uplink data, a terminal device needs to precode the data. A codebook-based uplink transmission mode is a precoding manner for uplink transmission.

Currently, in the codebook-based uplink transmission mode, a base station selects an appropriate codeword for the terminal device from a predefined uplink codebook, and indicates the selected codeword to the terminal device. The predefined uplink codebook is stored in the base station and the terminal device. A quantity of codewords that can be selected is limited, and a quantity of transmit antenna ports and a quantity of uplink transmission layers that can be supported are limited. As a communication service has an increasingly higher requirement on an uplink system capacity, the terminal device supports increasingly more transmit antenna ports. It is clear that the existing predefined uplink codebook cannot be adapted, limiting uplink transmission performance.

## SUMMARY

This application provides a communication method and a communication apparatus, to enable a codeword in an uplink codebook to support a terminal device with more antenna ports, thereby improving uplink transmission performance of the terminal device.

According to a first aspect, a communication method is provided. The method may be performed by a network device or a component (for example, a chip or a chip system) disposed in the network device.

Specifically, the method includes: obtaining a first codebook; determining first information when a quantity of uplink transmission layers of a terminal device is less than or equal to X, where the first information includes first indication information and third indication information, the first indication information indicates an index of a first codeword in the first codebook and a quantity of uplink transmission layers of the first codeword, and the third indication information indicates that the quantity of uplink transmission layers of the terminal device is less than or equal to X; or determining first information when a quantity of uplink transmission layers of a terminal device is greater than X, where the first information includes first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that the quantity of uplink transmission layers of the terminal device is greater than X, and the second codeword and the first codeword have a same coherent capability; and sending the first information, where the first information is used by the terminal device to determine an uplink precoding matrix, and X is any one of 1, 2, 3, and 4.

Based on the foregoing technical solution, a network device may obtain a predefined codebook, and indicate an index of a predefined codeword and a quantity of uplink transmission layers of a codeword to a first terminal device, so that the first terminal device determines an uplink precoding matrix to perform uplink precoding. In this way, codebook indication that supports a terminal device with a quantity of transmit antenna ports greater than 4Tx can be enabled based on a 4Tx uplink codebook in an existing protocol, to implement a flexible uplink precoding matrix indicator, adapt to more transmit antenna ports, and effectively improve uplink transmission performance. In addition, the codebook does not need to be redesigned, and a manner of joint indication using an uplink transmission rank indicator (transmission rank indicator, TRI) and a transmitted precoding matrix indicator (transmitted precoding matrix indicator, TPMI) in the existing protocol is not changed. Therefore, an impact point in the protocol is small, and forward compatibility is strong. Further, based on that the first codeword and the second codeword have the same coherent capability, an association relationship between a joint index and both a codeword index and a quantity of transmission layers is defined. For example, a table index is redesigned based on an existing indication table, so that the second codeword can be selected from codewords that have the same coherent capability as the first codeword when the second codeword is indicated. In this way, in comparison with an existing codeword indication method, bit overheads are reduced.

With reference to the first aspect, in a possible implementation, when the quantity of uplink transmission layers of the terminal device is less than or equal to X, the first information further includes fourth indication information, the fourth indication information indicates a first coefficient, and the first coefficient indicates a phase difference between a first half and a second half of transmit antenna ports corresponding to the uplink precoding matrix.

With reference to the first aspect, in a possible implementation, the first information further includes second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

With reference to the first aspect, in a possible implementation, when the quantity of uplink transmission layers of the terminal device is greater than X, the first information further includes fourth indication information, and the fourth indication information indicates a first coefficient.

With reference to the first aspect, in a possible implementation, the first codeword and the second codeword are selected from codewords whose quantities of uplink transmission layers are 1 to 4.

With reference to the first aspect, in a possible implementation, when the quantity of uplink transmission layers of the first terminal device is greater than 4, the second codeword or the first codeword is selected from codewords whose quantity of uplink transmission layers is 4.

In this technical solution, when the quantity of uplink transmission layers of the first terminal device is greater than 4, a codeword whose quantity of uplink transmission layers is 4 may be selected as the first codeword or the second codeword, and the first codeword and the second codeword have the same quantity of uplink transmission layers. The association relationship between the joint index and both the codeword index and the quantity of transmission layers is defined, so that the second codeword can be selected from the codeword that has the same coherent capability as the first codeword and whose quantity of uplink transmission layers is 4 when the second codeword is indicated. This needs only 1-bit overheads, so that overheads are further reduced.

With reference to the first aspect, in a possible implementation, when the fourth indication information indicates that the quantity of uplink transmission layers of the first terminal device is less than or equal to X, the quantity of uplink transmission layers of the first terminal device is equal to the quantity of uplink transmission layers of the first codeword; or when the fourth indication information indicates that the quantity of uplink transmission layers of the first terminal device is greater than X, the quantity of uplink transmission layers of the first terminal device is equal to a sum of the quantity of uplink transmission layers of the first codeword and the quantity of uplink transmission layers of the second codeword.

With reference to the first aspect, in a possible implementation, when the fourth indication information indicates that the quantity of uplink transmission layers of the first terminal device is greater than X, the quantity of uplink transmission layers of the first terminal device is equal to a sum of the quantity of uplink transmission layers of the first codeword or the quantity of uplink transmission layers of the second codeword and 4.

In this technical solution, when the quantity of uplink transmission layers of the first terminal device is greater than 4, the codeword whose quantity of uplink transmission layers is 4 may be selected as the first codeword or the second codeword. For the terminal device, the quantity of uplink transmission layers is the sum of the quantity of uplink transmission layers of the first codeword or the quantity of uplink transmission layers of the second codeword and 4.

With reference to the first aspect, in a possible implementation, a sum of indication bit overheads of the first codeword, the second codeword, and the coefficient is a first value.

In this technical solution, before receiving downlink control information (downlink control information, DCI), the first terminal device needs to know a total length of the DCI. Alternatively, before receiving downlink control information, if the first terminal device does not know a total length of the DCI, re-detection is needed. In this solution, after the total length of the DCI is limited, the first terminal device can avoid the re-detection.

According to a second aspect, a communication method is provided. The method may be performed by a terminal device or a component (for example, a chip or a chip system) disposed in the terminal device.

Specifically, the method includes: obtaining a first codebook; receiving first information, where the first information includes first indication information and third indication information, the first indication information indicates an index of a first codeword in the first codebook and a quantity of uplink transmission layers of the first codeword, and the third indication information indicates that a quantity of uplink transmission layers of a terminal device is less than or equal to X; or receiving first information, where the first information includes first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that a quantity of uplink transmission layers of a terminal device is greater than X, and the second codeword and the first codeword have a same coherent capability; and determining an uplink precoding matrix based on the first information, where X is any one of 1, 2, 3, and 4.

Based on the foregoing technical solution, a first terminal device may obtain a predefined codebook, and determine an uplink precoding matrix based on an index of a predefined codeword and a quantity of uplink transmission layers of a codeword that are indicated by a network device, to perform uplink precoding. In this way, codebook indication that supports a terminal device with a quantity of transmit antenna ports greater than 4Tx can be enabled based on a 4Tx uplink codebook in an existing protocol, to implement a flexible uplink precoding matrix indicator, adapt to more transmit antenna ports, and effectively improve uplink transmission performance.

With reference to the second aspect, in a possible implementation, when the third indication information indicates that the quantity of uplink transmission layers of the terminal device is less than or equal to X, the first information further includes fourth indication information, the fourth indication information indicates a first coefficient, and the first coefficient indicates a phase difference between a first half and a second half of transmit antenna ports corresponding to the uplink precoding matrix.

With reference to the second aspect, in a possible implementation, the first information further includes second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

With reference to the second aspect, in a possible implementation, when the third indication information indicates that the quantity of uplink transmission layers of the terminal device is greater than X, the first information further includes fourth indication information, and the fourth indication information indicates a first coefficient.

With reference to the second aspect, in a possible implementation, the first codeword and the second codeword are selected from codewords whose quantities of uplink transmission layers are 1 to 4.

With reference to the second aspect, in a possible implementation, when the quantity of uplink transmission layers of the first terminal device is greater than 4, the second codeword or the first codeword is selected from codewords whose quantity of uplink transmission layers is 4.

In this technical solution, when the quantity of uplink transmission layers of the first terminal device is greater than 4, a codeword whose quantity of uplink transmission layers is 4 may be selected as the first codeword or the second codeword, and the first codeword and the second codeword have the same quantity of uplink transmission layers. An association relationship between a joint index and both the codeword index and the quantity of transmission layers is defined, so that the second codeword can be selected from the codeword that has the same coherent capability as the first codeword and whose quantity of uplink transmission layers is 4 when the second codeword is indicated. This needs only 1-bit overheads, so that overheads are further reduced.

With reference to the second aspect, in a possible implementation, when the quantity of uplink transmission layers of the first terminal device is less than or equal to X, the quantity of uplink transmission layers of the first terminal device is equal to the quantity of uplink transmission layers of the first codeword; or when the quantity of uplink transmission layers of the first terminal device is greater than X, the quantity of uplink transmission layers of the first terminal device is equal to a sum of the quantity of uplink transmission layers of the first codeword and the quantity of uplink transmission layers of the second codeword.

With reference to the second aspect, in a possible implementation, when the quantity of uplink transmission layers of the first terminal device is greater than X, the quantity of uplink transmission layers of the first terminal device is equal to a sum of the quantity of uplink transmission layers of the first codeword or the quantity of uplink transmission layers of the second codeword and 4.

With reference to the second aspect, in a possible implementation, a sum of indication bit overheads of the first codeword, the second codeword, and the first coefficient is a first value.

In this technical solution, before receiving DCI, the first terminal device needs to know a total length of the DCI. Alternatively, before receiving downlink control information, if the first terminal device does not know a total length of the DCI, re-detection is needed. In this solution, after the total length of the DCI is limited, the first terminal device can avoid the re-detection.

According to a third aspect, a communication method is provided. The method may be performed by a network device or a component (for example, a chip or a chip system) disposed in the network device.

Specifically, the method includes: obtaining a first codebook; and generating and sending first indication information and third indication information when a quantity of uplink transmission layers of a first terminal device is less than or equal to X, where the first indication information indicates an index of a first codeword in the first codebook and a quantity of uplink transmission layers of the first codeword, the third indication information indicates that the quantity of uplink transmission layers of the first terminal device is less than or equal to X, and the index of the first codeword and the quantity of uplink transmission layers of the first codeword are used by the first terminal device to determine a first uplink precoding matrix and perform uplink precoding; or generating and sending first indication information, second indication information, and third indication information when a quantity of uplink transmission layers of a first terminal device is greater than X, where the second indication information indicates an index of a second codeword in the first codebook and a quantity of uplink transmission layers of the second codeword, the third indication information indicates that the quantity of uplink transmission layers of the first terminal device is greater than X, an index of a first codeword, a quantity of uplink transmission layers of the first codeword, the index of the second codeword, and the quantity of uplink transmission layers of the second codeword are used by the first terminal device to determine a first uplink precoding matrix and perform uplink precoding, the first codeword and the second codeword have a same coherent capability, and X is any one of 1, 2, 3, and 4.

Based on the foregoing technical solution, a network device may obtain a predefined codebook, and indicate an index of a predefined codeword and a quantity of uplink transmission layers of a codeword to a first terminal device, so that the first terminal device determines an uplink precoding matrix to perform uplink precoding. In this way, codebook indication that supports a terminal device with a quantity of transmit antenna ports greater than 4Tx can be enabled based on a 4Tx uplink codebook in an existing protocol, to implement a flexible uplink precoding matrix indicator, adapt to more transmit antenna ports, and effectively improve uplink transmission performance. In addition, the codebook does not need to be redesigned, and a manner of joint indication using a TRI and a TPMI in an existing protocol is not changed. Therefore, an impact point in the protocol is small, and forward compatibility is strong. Further, based on that the first codeword and the second codeword have a same coherent capability, an association relationship between a joint index and both a codeword index and a quantity of transmission layers is defined, so that the second codeword can be selected from codewords that have a same coherent capability as the first codeword when the second codeword is indicated. In this way, in comparison with an existing indication table, bit overheads are reduced.

According to a fourth aspect, a communication method is provided. The method may be performed by a terminal device or a component (for example, a chip or a chip system) disposed in the terminal device.

Specifically, the method includes: obtaining a first codebook; and receiving first indication information and third indication information, determining, based on the third indication information, that a quantity of uplink transmission layers of a first terminal device is less than or equal to X, determining, based on the first indication information, an index of a first codeword in the first codebook and a quantity of uplink transmission layers of the first codeword, and determining, based on the index of the first codeword and the quantity of uplink transmission layers of the first codeword, a first uplink precoding matrix and performing uplink precoding; or receiving first indication information, second indication information, and third indication information, determining, based on the third indication information, that a quantity of uplink transmission layers of a first terminal device is greater than X, determining, based on the first indication information, an index of a first codeword in the first codebook and a quantity of uplink transmission layers of the first codeword, determining, based on the second indication information, an index of a second codeword in the first codebook and a quantity of uplink transmission layers of the second codeword, and determining, based on the index of the first codeword, the quantity of uplink transmission layers of the first codeword, the index of the second codeword, and the quantity of uplink transmission layers of the second codeword, a first uplink precoding matrix and performing uplink precoding, where the first codeword and the second codeword have a same coherent capability, and X is any one of 1, 2, 3, and 4.

Based on the foregoing technical solution, a first terminal device may obtain a predefined codebook, and determine an uplink precoding matrix based on an index of a predefined codeword and a quantity of uplink transmission layers of a codeword that are indicated by a network device, to perform uplink precoding. In this way, codebook indication that supports a terminal device with a quantity of transmit antenna ports greater than 4Tx can be enabled based on a 4Tx uplink codebook in an existing protocol, to implement a flexible uplink precoding matrix indicator, adapt to more transmit antenna ports, and effectively improve uplink transmission performance.

With reference to the third aspect and the fourth aspect, in a possible implementation, the first codeword and the second codeword are selected from codewords whose quantities of uplink transmission layers are 1 to 4.

With reference to the third aspect and the fourth aspect, in a possible implementation, when the quantity of uplink transmission layers of the first terminal device is greater than 4, the second codeword or the first codeword is selected from codewords whose quantity of uplink transmission layers is 4.

With reference to the third aspect and the fourth aspect, in a possible implementation, when the third indication information indicates that the quantity of uplink transmission layers of the first terminal device is less than or equal to X, the quantity of uplink transmission layers of the first terminal device is equal to the quantity of uplink transmission layers of the first codeword; or when the third indication information indicates that the quantity of uplink transmission layers of the first terminal device is greater than X, the quantity of uplink transmission layers of the first terminal device is equal to a sum of the quantity of uplink transmission layers of the first codeword and the quantity of uplink transmission layers of the second codeword.

With reference to the third aspect and the fourth aspect, in a possible implementation, when the third indication information indicates that the quantity of uplink transmission layers of the first terminal device is greater than X, the quantity of uplink transmission layers of the first terminal device is equal to a sum of the quantity of uplink transmission layers of the first codeword or the quantity of uplink transmission layers of the second codeword and 4.

According to a fifth aspect, a communication apparatus is provided. The apparatus may be a network device, or may be a component (for example, a chip or a chip system) disposed in the network device.

Specifically, the apparatus includes: a processing unit, configured to obtain a first codebook, where the processing unit is further configured to determine first information when a quantity of uplink transmission layers of a terminal device is less than or equal to X, where the first information includes first indication information and third indication information, the first indication information indicates an index of a first codeword in the first codebook and a quantity of uplink transmission layers of the first codeword, and the third indication information indicates that the quantity of uplink transmission layers of the terminal device is less than or equal to X; or the processing unit is further configured to determine first information when a quantity of uplink transmission layers of a terminal device is greater than X, where the first information includes first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that the quantity of uplink transmission layers of the terminal device is greater than X, and the second codeword and the first codeword have a same coherent capability; and a transceiver unit, configured to send the first information, where the first information is used by the terminal device to determine an uplink precoding matrix, and X is any one of 1, 2, 3, and 4.

With reference to the fifth aspect, in a possible implementation, when the quantity of uplink transmission layers of the terminal device is less than or equal to X, the first information further includes fourth indication information, the fourth indication information indicates a first coefficient, and the first coefficient indicates a phase difference between a first half and a second half of transmit antenna ports corresponding to the uplink precoding matrix.

With reference to the fifth aspect, in a possible implementation, the first information further includes second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

With reference to the fifth aspect, in a possible implementation, when the quantity of uplink transmission layers of the terminal device is greater than X, the first information further includes fourth indication information, and the fourth indication information indicates a first coefficient.

With reference to the fifth aspect, in a possible implementation, the first codeword and the second codeword are selected from codewords whose quantities of uplink transmission layers are 1 to 4.

With reference to the fifth aspect, in a possible implementation, when the quantity of uplink transmission layers of the first terminal device is greater than 4, the second codeword or the first codeword is selected from codewords whose quantity of uplink transmission layers is 4.

With reference to the fifth aspect, in a possible implementation, when the fourth indication information indicates that the quantity of uplink transmission layers of the first terminal device is less than or equal to X, the quantity of uplink transmission layers of the first terminal device is equal to the quantity of uplink transmission layers of the first codeword; or when the fourth indication information indicates that the quantity of uplink transmission layers of the first terminal device is greater than X, the quantity of uplink transmission layers of the first terminal device is equal to a sum of the quantity of uplink transmission layers of the first codeword and the quantity of uplink transmission layers of the second codeword.

With reference to the fifth aspect, in a possible implementation, when the fourth indication information indicates that the quantity of uplink transmission layers of the first terminal device is greater than X, the quantity of uplink transmission layers of the first terminal device is equal to a sum of the quantity of uplink transmission layers of the first codeword or the quantity of uplink transmission layers of the second codeword and 4.

With reference to the fifth aspect, in a possible implementation, a sum of indication bit overheads of the first codeword, the second codeword, and the coefficient is a first value.

According to a sixth aspect, a communication apparatus is provided. The apparatus may be a terminal device or a component (for example, a chip or a chip system) disposed in the terminal device.

Specifically, the apparatus includes: a processing unit, configured to obtain a first codebook; and a transceiver unit, configured to receive first information, where the first information includes first indication information and third indication information, the first indication information indicates an index of a first codeword in the first codebook and a quantity of uplink transmission layers of the first codeword, and the third indication information indicates that a quantity of uplink transmission layers of a terminal device is less than or equal to X; or the transceiver unit is configured to receive first information, where the first information includes first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that a quantity of uplink transmission layers of a terminal device is greater than X, and the second codeword and the first codeword have a same coherent capability; and the processing unit is further configured to determine an uplink precoding matrix based on the first information, where X is any one of 1, 2, 3, and 4.

With reference to the sixth aspect, in a possible implementation, when the quantity of uplink transmission layers

of the terminal device is less than or equal to X, the first information further includes fourth indication information, the fourth indication information indicates a first coefficient, and the first coefficient indicates a phase difference between a first half and a second half of transmit antenna ports corresponding to the uplink precoding matrix.

With reference to the sixth aspect, in a possible implementation, the first information further includes second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

With reference to the sixth aspect, in a possible implementation, when the quantity of uplink transmission layers of the terminal device is greater than X, the first information further includes fourth indication information, and the fourth indication information indicates a first coefficient.

With reference to the sixth aspect, in a possible implementation, the first codeword and the second codeword are selected from codewords whose quantities of uplink transmission layers are 1 to 4.

With reference to the sixth aspect, in a possible implementation, when the quantity of uplink transmission layers of the first terminal device is greater than 4, the second codeword or the first codeword is selected from codewords whose quantity of uplink transmission layers is 4.

With reference to the sixth aspect, in a possible implementation, when the quantity of uplink transmission layers of the first terminal device is less than or equal to X, the quantity of uplink transmission layers of the first terminal device is equal to the quantity of uplink transmission layers of the first codeword; or when the quantity of uplink transmission layers of the first terminal device is greater than X, the quantity of uplink transmission layers of the first terminal device is equal to a sum of the quantity of uplink transmission layers of the first codeword and the quantity of uplink transmission layers of the second codeword.

With reference to the sixth aspect, in a possible implementation, when the quantity of uplink transmission layers of the first terminal device is greater than X, the quantity of uplink transmission layers of the first terminal device is equal to a sum of the quantity of uplink transmission layers of the first codeword or the quantity of uplink transmission layers of the second codeword and 4.

With reference to the sixth aspect, in a possible implementation, a sum of indication bit overheads of the first codeword, the second codeword, and the first coefficient is a first value.

According to a seventh aspect, a communication apparatus is provided, including modules or units configured to perform the method according to any one of the first aspect to the fourth aspect and the possible implementations of the first aspect to the fourth aspect.

According to an eighth aspect, a communication apparatus is provided, including a processor. The processor is coupled to a memory, and may be configured to execute instructions in the memory, to implement the method according to any one of the first aspect to the fourth aspect and the possible implementations of the first aspect to the fourth aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip disposed in a terminal device. When the communication apparatus is the chip disposed in the terminal device, the communication interface may be an input/output interface.

Optionally, the transceiver may be a transceiver circuit. Optionally, the input/output interface may be an input/output circuit.

According to a ninth aspect, a processor is provided, including an input circuit, an output circuit, and a processing circuit. The processing circuit is configured to: receive a signal through the input circuit, and transmit a signal through the output circuit, to enable the processor to perform the method according to any one of the first aspect to the fourth aspect and the possible implementations of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, a processing apparatus is provided, including a processor and a memory. The processor is configured to: read instructions stored in the memory, receive a signal through a receiver, and transmit a signal through a transmitter, to perform the method according to any one of the first aspect to the fourth aspect and the possible implementations of the first aspect to the fourth aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the tenth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eleventh aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a thirteenth aspect, a communication system is provided, including the foregoing terminal device and network device.

## BRIEF DESCRIPTION OF DRAWINGS

FIG. 1 is a diagram of an architecture of a communication system applicable to an uplink precoding indication method according to an embodiment of this application;

FIG. 2 is a schematic flowchart of an uplink precoding indication method according to an embodiment of this application;

FIG. 3 is a schematic flowchart of an uplink precoding indication method according to an embodiment of this application;

FIG. 4 is a block diagram of a communication apparatus according to an embodiment of this application;

FIG. 5 is a diagram of a structure of a terminal device according to an embodiment of this application; and

FIG. 6 is a diagram of a structure of a network device according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th Generation, 5G) mobile communication system, or a new radio access technology (new radio Access Technology, NR) system. The 5G mobile communication system may include non-standalone (non-standalone, NSA) and/or standalone (standalone, SA).

The technical solutions provided in this application may be further applied to machine type communication (machine type communication, MTC), long term evolution-machine (Long Term Evolution-machine, LTE-M), a device-to-device (device-to device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The technical solutions provided in this application may be further applied to a future communication system, for example, a 6th generation mobile communication system. This is not limited in this application.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system, may be 5G, for example, NR, a gNB in a system, or a transmission point (TRP or TP), or one antenna panel or one group of antenna panels (including a plurality of antenna panels) of a base station in a 5G system, or may be a network node, for example, a baseband unit (BBU), or a distributed unit (distributed unit, DU), that forms a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in a radio access network (radio access network, RAN), or the CU may be classified into a network device in a core network (core network, CN). This is not limited in this application.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of a terminal may be a mobile phone (mobile phone), a tablet computer (pad), a computer (for example, a laptop or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices that are intelligently designed and developed for daily wear by using a wearable technology, such as glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to be used in cooperation with another device like a smartphone, for example, various smart bands and smart jewelry for physical sign monitoring.

In addition, the terminal device may alternatively be a terminal device in an internet of things (internet of things, IoT) system. The IoT is an important part in future development of information technologies. A main technical feature of the IoT is to connect things to a network by using a communication technology, to implement an intelligent network for human-machine interconnection and thing-thing interconnection. An IoT technology may implement massive connections, deep coverage, and terminal power saving by using, for example, a narrowband (narrowband) NB technology.

In addition, the terminal device may alternatively include sensors such as an intelligent printer, a train detector, and a gas station, and main functions of the terminal device include collecting data (which is a function of some terminal devices), receiving control information and downlink data of a network device, sending an electromagnetic wave, and transmitting uplink data to the network device.

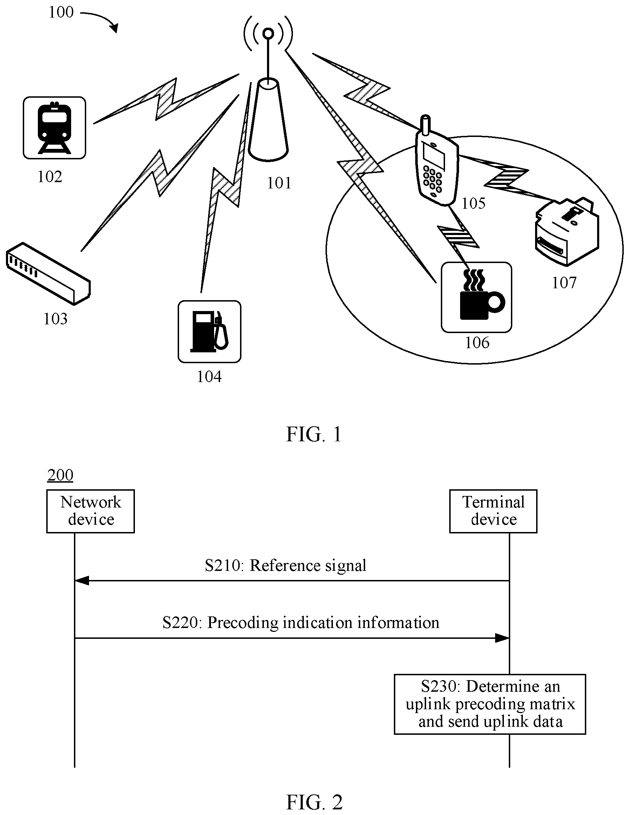

For ease of understanding embodiments of this application, a communication system applicable to a method provided in embodiments of this application is first described in detail with reference to FIG. 1. FIG. 1 is a diagram of a communication system 100 applicable to a method according to an embodiment of this application. As shown in the figure, the communication system 100 may include at least one network device, for example, a network device 101 in the 5G system shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device located in the coverage area. For example, the network device may send configuration information to the terminal device, and the terminal device may send uplink data to the network device based on the configuration information. For another example, the network device may send downlink data to the terminal device. For another example, the network device may calculate a quantity of streams and uplink precoding that are for uplink transmission of the terminal device, and indicate the quantity of streams and the uplink precoding to the terminal device by using downlink information. Therefore, the network device 101 and the terminal devices 102 to 107 in FIG. 1 form a communication system.

Optionally, the terminal devices may directly communicate with each other. For example, direct communication between the terminal devices may be implemented by using a D2D technology or the like. As shown in the figure, direct communication may be performed between terminal devices 105 and 106 and between terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal device 105 and the terminal device 106 in the figure may directly communicate with the network device 101. Alternatively, the terminal devices 105 to 107 may indirectly communicate with the network device 101. For example, the terminal device 107 in the figure communicates with the network device 101 via the terminal device 106.

It should be understood that FIG. 1 shows an example of one network device, a plurality of terminal devices, and a communication link between communication devices. Optionally, the communication system 100 may include a plurality of network devices, and coverage of each network device may include another quantity of terminal devices, for example, more or fewer terminal devices. This is not limited in this application.

It should be noted that when the communication system 100 includes the plurality of network devices, a terminal device in a coverage area of each network device may send uplink data to any network device, or may send uplink data to a plurality of network devices. For example, uplink data sent by a terminal device in an adjacent area of coverage areas of two network devices may be received by one of the two network devices, or may be jointly received by the two network devices.

A plurality of antennas may be disposed for the foregoing communication devices, for example, the network device 101 and the terminal devices 102 to 107 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

Optionally, the communication system 100 may further include another network entity like a network controller or a mobility management entity. This is not limited in embodiments of this application.

In a massive-MIMO technology, a terminal device may send uplink data to an access network device through a plurality of transmit antenna ports. To use a spatial degree of freedom brought by the massive-MIMO technology, the terminal device needs to precode uplink transmission information during uplink transmission. The precoding for uplink transmission may be a codebook-based uplink transmission mode. It should be noted that, in the method provided in embodiments of this application, an example in which an object on which precoding is performed is uplink data is used for description. The uplink data may be, for example, uplink service data or uplink signaling data. In practice, the object on which precoding is performed may alternatively be any uplink transmission information. This is not specifically limited in embodiments of this application.

For ease of understanding of embodiments of this application, some technical terms in embodiments of this application are briefly described below.

1. Precoding technology

When a channel status is known, a sending device may process a to-be-sent signal by using a precoding matrix that matches the channel status, so that a precoded to-be-sent signal adapts to a channel, to reduce complexity of eliminating inter-channel impact by a receiving device. Received signal quality (for example, a signal to interference plus noise ratio (signal to interference plus noise ratio, SINR)) is improved through precoding processing on the to-be-sent signal. Therefore, by using a precoding technology, the sending device and a plurality of receiving devices may perform transmission on a same time-frequency resource. In other words, multi-user multiple-input multiple-output (multi-user multiple-input multiple-output, MU-MIMO) is implemented. It should be understood that related descriptions of the precoding technology in this specification are merely examples for ease of understanding, and are not intended to limit the protection scope of embodiments of this application. In a specific implementation process, the sending device may alternatively perform precoding in another manner. For example, when channel information (for example, but not limited to a channel matrix) cannot be obtained, precoding is performed by using a preset precoding matrix or by using weighted processing. For brevity, specific content thereof is not described in this specification.

2. Transmit antenna port

Embodiments of this application relate to a transmit antenna port of a terminal device. One or more physical antennas of the terminal device form one logical antenna, and one transmit antenna port corresponds to a port of one logical antenna. There may be one or more transmit antenna ports of the terminal device. For example, the terminal device has two transmit antenna ports, four transmit antenna ports, eight transmit antenna ports, 16 transmit antenna ports, 32 transmit antenna ports, or the like.

3. Coherent capability of a terminal device

The coherent capability of the terminal device includes non-coherence (non coherent), partial coherence (partial coherent), or full coherence (fully coherent). The non-coherence means that the terminal device can send uplink data only through one of a plurality of transmit antenna ports at one moment, or the non-coherence may mean that the plurality of transmit antenna ports are non-coherent to each other. The partial coherence means that the terminal device can simultaneously send uplink data through some (at least two) of the plurality of transmit antenna ports, or the partial coherence may mean that the plurality of transmit antenna ports are partially coherent to each other. The full coherence means that the terminal device can simultaneously send uplink data through all of the plurality of transmit antenna ports, or the full coherence may mean that the plurality of transmit antenna ports are fully coherent to each other.

4. Quantity of uplink transmission layers

The quantity of uplink transmission layers means a quantity of uplink data streams, or is referred to as a quantity of spatial streams. For spatial multiplexing, a maximum quantity of uplink transmission layers is a rank (rank) of a MIMO channel matrix. The rank of the MIMO channel matrix is a quantity of diagonal elements (singular values) of a singular value matrix obtained by performing transition matrix singular value decomposition (singular value decomposition, SVD) on the MIMO channel matrix. Usually, a maximum quantity of uplink transmission layers of a terminal device is less than or equal to a quantity of transmit antenna ports of the terminal device, and an actual quantity of uplink transmission layers of the terminal device is less than or equal to the maximum quantity of uplink transmission layers of the terminal device. For example, the maximum quantity of uplink transmission layers of the terminal device is equal to the quantity of transmit antenna ports of the terminal device. For example, if the quantity of transmit antenna ports of the terminal device is 8, the maximum quantity of transmission layers corresponding to the quantity of transmit antenna ports of the terminal device is 8, and the quantity of uplink transmission layers of the terminal device may be any integer from 1 to 8.

5. Codebook and Codeword

The codebook in embodiments of this application mainly complies with a codebook defined in the 3rd Generation Partnership Project (3rd Generation Partnership Project, 3GPP) standard, for example, a codebook defined in a 3GPP technical specification (technical specification, TS) 38.211 protocol, or may be described as an uplink codebook. For example, a plurality of codebooks are defined in a protocol of 3GPP TS 38.211 V16.7.0, each codebook includes a plurality of codewords, and codewords in a same codebook correspond to a same quantity of transmit antenna ports and a same quantity of uplink transmission layers. A codeword is also referred to as an uplink precoding matrix. For ease of understanding, the following Table 1 and Table 2 respectively correspond to a codebook in which a quantity of uplink transmission layers is 1 and a quantity of transmit antenna ports is 2, and a codebook in which a quantity of uplink transmission layers is 2 and a quantity of transmit antenna ports is 2, and the following Table 3 to Table 6 respectively correspond to a codebook in which a quantity of uplink transmission layers is 1 and a quantity of transmit antenna ports is 4, a codebook in which a quantity of uplink transmission layers is 2 and a quantity of transmit antenna ports is 4, a codebook in which a quantity of uplink transmission layers is 3 and a quantity of transmit antenna ports is 4, and a codebook in which a quantity of uplink transmission layers is 4 and a quantity of transmit antenna ports is 4.

Table 1

| TPMI | Codeword | | | | | | | |
|---|---|---|---|---|---|---|---|---|
| 0 to 5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | | |

Transmitted precoding matrix indicator (transmitted precoding matrix indicator, TPMI) values corresponding to the six codewords shown in Table 1 from left to right are 0 to 5. For example, a TPMI of a 1st codeword from left to right is equal to 0, and a TPMI of a 6th codeword from left to right is equal to 5. Each codeword is a 2×1 matrix. To be specific, each matrix includes two rows, and this indicates that a quantity of transmit antenna ports corresponding to the codeword is 2; each matrix includes one column, and this indicates that a quantity of uplink transmission layers corresponding to the codeword is 1; and j represents an imaginary number. The TPMI may be understood as a sequence number or an index of a codeword in a codebook.

There is only one non-zero element in codewords indicated by the TPMI=0 and the TPMI=1, and this indicates that two transmit antenna ports corresponding to the codewords are non-coherent to each other. Elements in codewords indicated by the TPMI=2 to 5 are all non-zero elements, and this indicates that two transmit antenna ports corresponding to the codewords are fully coherent to each other.

Table 2

| TPMI | Codeword | | |
|---|---|---|---|
| 0 to 2 | $\frac{1}{\sqrt{2}}\begin{bmatrix}1 & 0\\0 & 1\end{bmatrix}$ | $\frac{1}{2}\begin{bmatrix}1 & 1\\1 & -1\end{bmatrix}$ | $\frac{1}{2}\begin{bmatrix}1 & 1\\j & -j\end{bmatrix}$ |

TPMI values corresponding to the three codewords shown in Table 2 from left to right are 0 to 2, and each codeword is a 2×2 matrix. To be specific, each matrix includes two rows, and this indicates that a quantity of transmit antenna ports corresponding to the codeword is 2; and each matrix includes two columns, and this indicates that a quantity of uplink transmission layers corresponding to the codeword is 2.

There is only one non-zero element in each column of a codeword indicated by the TPMI=0, and this indicates that two transmit antenna ports corresponding to the codeword are non-coherent to each other. Elements in each column of codewords indicated by the TPMI=1 and 2 are all non-zero elements, and this indicates that two transmit antenna ports corresponding to the codewords are fully coherent to each other.

Table 3

| TPMI | Codeword | | | | | | | |
|---|---|---|---|---|---|---|---|---|
| 0 to 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |

(continued)

| TPMI | Codeword | | | | | | | |
|---|---|---|---|---|---|---|---|---|
| 8 to 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 to 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 to 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Table 3 shows that TPMI values corresponding to the eight codewords in a 1st row from left to right are 0 to 7, TPMI values corresponding to the eight codewords in a 2nd row from left to right are 8 to 15, TPMI values corresponding to the eight codewords in a 3rd row from left to right are 16 to 23, and TPMI values corresponding to the four codewords in a 4th row from left to right are 24 to 27. Each codeword is a 4×1 matrix. To be specific, each matrix includes four rows, and this indicates that a quantity of transmit antenna ports corresponding to the codeword is 4; and each matrix includes one column, and this indicates that a quantity of uplink transmission layers corresponding to the codeword is 1.

There is only one non-zero element in codewords indicated by the TPMI=0 to 3, and this indicates that four transmit antenna ports corresponding to the codewords are non-coherent to each other. Some elements in codewords indicated by the TPMI=4 to 11 are non-zero elements and values of some elements are 0, and this indicates that four transmit antenna ports corresponding to the codewords are partially coherent to each other. Elements in codewords indicated by the TPMI=12 to 27 are all non-zero elements, and this indicates that four transmit antenna ports corresponding to the codewords are fully coherent to each other.

Table 4

| TPMI | Codeword | | | |
|---|---|---|---|---|
| 0 to 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 to 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 to 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |

(continued)

| TPMI | Codeword | | | |
|---|---|---|---|---|
| 12 to 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 to 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20 to 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

Table 4 shows that TPMI values corresponding to the four codewords in a 1st row from left to right are 0 to 3, TPMI values corresponding to the four codewords in a 2nd row from left to right are 4 to 7, TPMI values corresponding to the four codewords in a 3rd row from left to right are 8 to 11, TPMI values corresponding to the four codewords in a 4th row from left to right are 12 to 15, TPMI values corresponding to the four codewords in a 5th row from left to right are 16 to 19, and TPMI values corresponding to the two codewords in a 6th row from left to right are 20 to 21. Each codeword is a $4\times2$ matrix. To be specific, each matrix includes four rows, and this indicates that a quantity of transmit antenna ports corresponding to the codeword is 4; and each matrix includes two columns, and this indicates that a quantity of uplink transmission layers corresponding to the codeword is 2.

There is only one non-zero element in each column of codewords indicated by the TPMI=0 to 5, and this indicates that four transmit antenna ports corresponding to the codewords are non-coherent to each other. Some elements in each column of codewords indicated by the TPMI=6 to 13 are non-zero elements and values of some elements are 0, and this indicates that four transmit antenna ports corresponding to the codewords are partially coherent to each other. Elements in each column of codewords indicated by the TPMI=14 to 21 are all non-zero elements, and this indicates that four transmit antenna ports corresponding to the codewords are fully coherent to each other.

Table 5

| TPMI | Codeword | | | |
|---|---|---|---|---|
| 0 to 3 | $\frac{1}{2}\begin{bmatrix}1&0&0\\0&1&0\\0&0&1\\0&0&0\end{bmatrix}$ | $\frac{1}{2}\begin{bmatrix}1&0&0\\0&1&0\\1&0&0\\0&0&1\end{bmatrix}$ | $\frac{1}{2}\begin{bmatrix}1&0&0\\0&1&0\\-1&0&0\\0&0&1\end{bmatrix}$ | $\frac{1}{2\sqrt{3}}\begin{bmatrix}1&1&1\\1&-1&1\\1&1&-1\\1&-1&-1\end{bmatrix}$ |
| 4 to 6 | $\frac{1}{2\sqrt{3}}\begin{bmatrix}1&1&1\\1&-1&1\\j&j&-j\\j&-j&-j\end{bmatrix}$ | $\frac{1}{2\sqrt{3}}\begin{bmatrix}1&1&1\\-1&1&-1\\1&1&-1\\-1&1&1\end{bmatrix}$ | $\frac{1}{2\sqrt{3}}\begin{bmatrix}1&1&1\\-1&1&-1\\j&j&-j\\-j&j&j\end{bmatrix}$ | - |

Table 5 shows that TPMI values corresponding to the four codewords in a 1st row from left to right are 0 to 3, and TPMI values corresponding to the four codewords in a 2nd row from left to right are 4 to 6. Each codeword is a $4\times3$ matrix. To be specific, each matrix includes four rows, and this indicates that a quantity of transmit antenna ports corresponding to the codeword is 4; and each matrix includes three columns, and this indicates that a quantity of uplink transmission layers corresponding to the codeword is 3.

There is only one non-zero element in each column of a codeword indicated by the TPMI=0, and this indicates that four transmit antenna ports corresponding to the codeword are non-coherent to each other. Some elements in at least one column of codewords indicated by the TPMI=1 and 2 are non-zero elements and values of some elements are 0, and this indicates that four transmit antenna ports corresponding to the codewords are partially coherent to each other. Elements in each column of codewords indicated by the TPMI=3 to 6 are all non-zero elements, and this indicates that four transmit antenna ports corresponding to the codewords are fully coherent to each other.

Table 6

| TPMI | Codeword | | | |
|---|---|---|---|---|
| 0 to 3 | $\dfrac{1}{2}\begin{bmatrix}1&0&0&0\\0&1&0&0\\0&0&1&0\\0&0&0&1\end{bmatrix}$ | $\dfrac{1}{2\sqrt{2}}\begin{bmatrix}1&1&0&0\\0&0&1&1\\1&-1&0&0\\0&0&1&-1\end{bmatrix}$ | $\dfrac{1}{2\sqrt{2}}\begin{bmatrix}1&1&0&0\\0&0&1&1\\j&-j&0&0\\0&0&j&-j\end{bmatrix}$ | $\dfrac{1}{4}\begin{bmatrix}1&1&1&1\\1&-1&1&-1\\1&1&-1&-1\\1&-1&-1&1\end{bmatrix}$ |
| 4 | $\dfrac{1}{4}\begin{bmatrix}1&1&1&1\\1&-1&1&-1\\j&j&-j&-j\\j&-j&-j&j\end{bmatrix}$ | - | - | - |

Table 6 shows that TPMI values corresponding to the four codewords in a 1st row from left to right are 0 to 3, and a TPMI value corresponding to the codeword in a 2nd row is 4. Each codeword is a $4\times4$ matrix. To be specific, each matrix includes four rows, and this indicates that a quantity of transmit antenna ports corresponding to the codeword is 4; and each matrix includes four columns, and this indicates that a quantity of uplink transmission layers corresponding to the codeword is 4.

There is only one non-zero element in each column of a codeword indicated by the TPMI=0, and this indicates that four transmit antenna ports corresponding to the codeword are non-coherent to each other. Some elements in each column of codewords indicated by the TPMI=1 and 2 are non-zero elements and values of some elements are 0, and this indicates that four transmit antenna ports corresponding to the codewords are partially coherent to each other. Elements in each column of codewords indicated by the TPMI=3 and 4 are all non-zero elements, and this indicates that four transmit antenna ports corresponding to the codewords are fully coherent to each other.

6. Joint indication using a TPMI and a TRI

A terminal device may determine an uplink transmitted precoding matrix and an actual quantity of uplink transmission layers of the terminal device by using an SRS resource indicator SRI (SRS resource indicator), an uplink transmission rank indicator TRI (Transmission rank indicator), and a TPMI in a downlink message, to perform uplink data transmission. The TRI and the TPMI are used for indication in a joint indication manner. Table 7 shows Table 7.3.1.1.2-2 in a 3GPP TS 38.212 V16.7.0 protocol. The terminal device selects a row in the table based on indication in DCI, to determine a TPMI and a TRI.

It should be understood that a quantity of transmit antenna ports corresponding to Table 7 is 4, and a TPMI in Table 7 may be a TPMI in a codebook corresponding to the quantity 4 of transmit antenna ports, that is, a TPMI in the foregoing Table 3 to Table 6. The joint indication using the TPMI and the TRI may be understood as that an index in Table 7 indicates an uplink transmission rank indicator TRI corresponding to a codeword and a TPMI of the codeword. That is, the index may be understood as a joint index. The non-coherence, the partial coherence, and the full coherence mentioned in Table 7 correspond to the non-coherent codeword, the partially coherent codeword, and the fully coherent codeword in Table 3 to Table 6. For example, in Table 7, that a first index is 0 indicates one layer and a TPMI=0, corresponding to the non-coherent codeword indicated by the TPMI=0 in Table 3, and the codeword may be applied to a case in which transmit antenna ports are fully coherent, partially coherent, and non-coherent to each other; in Table 7, that a first index is 19 indicates one layer and a TPMI=11, corresponding to the partially coherent codeword indicated by the TPMI=11 in Table 3, and the codeword may be applied to a case in which transmit antenna ports are fully coherent and partially coherent to each other; and in Table 7, that a first index is 32 indicates one layer and a TPMI=12, corresponding to the fully coherent codeword indicated by the TPMI=12 in Table 3, and the codeword may be applied to a case in which transmit antenna ports are fully coherent to each other.

In addition, it should be understood that an ellipsis "..." in Table 7 indicates that a first index between a 1st index preceding the ellipsis and a 1st first index following the ellipsis is omitted. For example, first indexes 5 to 8 are omitted between a first index 4 and a first index 9, where a quantity of layers (or referred to as a quantity of uplink transmission layers) indicated by each of the first indexes 5 to 8 is 2, and a TPMI increases in ascending order. To be specific, the first index 5 specifically indicates a quantity 2 of layers and a TPMI=1; a first index 6 specifically indicates a quantity 2 of layers and a TPMI=2; a first index 7 specifically indicates a quantity 2 of layers and a TPMI=3; and the first index 8 specifically indicates a quantity 2 of layers and a TPMI=4.

Table 7

| Index | Codebook subset=fully coherent, partially coherent, and non-coherent | Index | Codebook subset=partially coherent and non-coherent | Index | Codebook subset=non-coherent |
|---|---|---|---|---|---|
| 0 | One layer and TPMI=0 | 0 | One layer and TPMI=0 | 0 | One layer and TPMI=0 |
| 1 | One layer and TPMI=1 | 1 | One layer and TPMI=1 | 1 | One layer and TPMI=1 |
| ... | | ... | | ... | |
| 3 | One layer and TPMI=3 | 3 | One layer and TPMI=3 | 3 | One layer and TPMI=3 |
| 4 | Two layers and TPMI=0 | 4 | Two layers and TPMI=0 | 4 | Two layers and TPMI=0 |
| ... | | ... | | ... | |
| 9 | Two layers and TPMI=5 | 9 | Two layers and TPMI=5 | 9 | Two layers and TPMI=5 |
| 10 | Three layers and TPMI=0 | 10 | Three layers and TPMI=0 | 10 | Three layers and TPMI=0 |
| 11 | Four layers and TPMI=0 | 11 | Four layers and TPMI=0 | 11 | Four layers and TPMI=0 |
| 12 | One layer and TPMI=4 | 12 | One layer and TPMI=4 | 12 to 15 | Reserved position |
| ... | | ... | | | |
| 19 | One layer and TPMI=11 | 19 | One layer and TPMI=11 | | |
| 20 | Two layers and TPMI=6 | 20 | Two layers and TPMI=6 | | |
| ... | | ... | | | |
| 27 | Two layers and TPMI=13 | 27 | Two layers and TPMI=13 | | |
| 28 | Three layers and TPMI=1 | 28 | Three layers and TPMI=1 | | |
| 29 | Three layers and TPMI=2 | 29 | Three layers and TPMI=2 | | |
| 30 | Four layers and TPMI=1 | 30 | Four layers and TPMI=1 | | |
| 31 | Four layers and TPMI=2 | 31 | Four layers and TPMI=2 | | |
| 32 | One layer and TPMI=12 | | | | |
| ... | | | | | |
| 47 | One layer and TPMI=27 | | | | |
| 48 | Two layers and TPMI=14 | | | | |
| ... | | | | | |
| 55 | Two layers and TPMI=21 | | | | |

(continued)

| Index | Codebook subset=fully coherent, partially coherent, and non-coherent | Index | Codebook subset=partially coherent and non-coherent | Index | Codebook subset=non-coherent |
|---|---|---|---|---|---|
| 56 | Three layers and TPMI=3 | | | | |
| ... | | | | | |
| 59 | Three layers and TPMI=6 | | | | |
| 60 | Four layers and TPMI=3 | | | | |
| 61 | Four layers and TPMI=4 | | | | |
| 62 and 63 | Reserved position | | | | |

In a related conventional technology, an access network device usually estimates, based on a reference signal, for example, a channel sounding reference signal (sounding reference signal, SRS), that is sent by the terminal device and that is used for measuring an uplink channel, a channel condition status of a radio channel between the terminal device and the access network device. The access network device determines, based on the channel condition status, a quantity of transmit antenna ports used by the terminal device, and then calculates, based on the quantity of transmit antenna ports used by the terminal device and the channel condition status, an uplink precoding matrix that can be used when the terminal device sends uplink data. For brevity, the uplink precoding matrix calculated by the access network device is referred to as a second uplink precoding matrix. The second uplink precoding matrix corresponds to the quantity of transmit antenna ports used by the terminal device and a specific quantity of uplink transmission layers. The access network device selects, from the codebook predefined in the 3GPP protocol based on the specific quantity of uplink transmission layers, a codeword most similar to the second uplink precoding matrix, and indicates, to the terminal device, a TPMI and a quantity of uplink transmission layers that correspond to the codeword. The quantity of transmit antenna ports corresponding to the TPMI indicated by the access network device may be used as a quantity of transmit antenna ports used when the terminal device sends the uplink data, and the quantity of uplink transmission layers indicated by the access network device may be used as a quantity of uplink transmission layers to which the uplink data to be sent by the terminal device is mapped. Then, the terminal device determines a codeword based on the TPMI and the quantity of uplink transmission layers that are indicated by the access network device, precodes the uplink data by using the codeword, and sends precoded uplink data based on transmit antenna ports and the quantity of uplink transmission layers that correspond to the codeword.

It should be understood that if the codebook predefined in the 3GPP protocol (for example, Table 1 to Table 6) includes the second uplink precoding matrix, that is, the second uplink precoding matrix is a codeword in the codebook predefined in the 3GPP protocol, the codeword selected by the access network device is consistent with the second uplink precoding matrix. If the codebook predefined in the 3GPP protocol does not include the second uplink precoding matrix, that is, the second uplink precoding matrix is not a codeword in the codebook predefined in the 3GPP protocol, the codeword selected by the access network device may be a codeword that has a smallest difference from the second uplink precoding matrix. For example, the smallest difference may be a smallest Euclidean distance between the codeword selected by the access network device in the codebook predefined in the 3GPP protocol and the second uplink precoding matrix; or the smallest difference may be that the codeword selected by the access network device in the codebook predefined in the 3GPP protocol and the second uplink precoding matrix have a largest quantity of same elements.

It should be understood that, that the terminal device precodes the uplink data by using different codewords is equivalent to that the terminal device sends the uplink data by using different beam patterns (beam patterns). In other words, in any one of the foregoing Table 1 to Table 6, one column in each codeword corresponds to one beam pattern. For example, a quantity of columns in a codeword in Table 1 is 1. That the access network device determines to select one codeword from the six codewords in Table 1 may also be described as selecting one of six beam patterns to indicate to the terminal device, so that the terminal device may send the uplink data based on the beam pattern indicated by the access network device. For another example, a quantity of columns in a codeword in Table 4 is 2. That the access network device determines to select one codeword from 22 codewords in Table 4 may also mean that a beam pattern corresponding to a 1st column of the selected codeword is indicated to the terminal device to send first-layer uplink data, and a beam pattern corresponding to a 2nd column of the selected codeword is indicated to the terminal device to send second-layer uplink data.

It can be learned from the codebook described above that the current 3GPP protocol supports a codeword indicated by the access network device in corresponding to a maximum quantity 4 of uplink transmission layers and a maximum quantity 4 of transmit antenna ports. With development of antenna technologies, the terminal device supports more transmit antenna ports. For example, the quantity of transmit antenna ports of the terminal device may be further increased to 8. It can be learned that the quantity of transmit antenna ports used by the terminal device may exceed the maximum quantity of transmit antenna ports corresponding to the codeword that is supported by the current 3GPP protocol. Correspondingly, the quantity of uplink transmission layers may also exceed the maximum quantity of transmission layers corresponding to the codeword that is supported by the current 3GPP protocol. If a manner of selecting the codeword from the codebook predefined in the current 3GPP protocol and indicating the codeword to the terminal device is still used, more transmit antenna ports cannot be adapted, and it is difficult to effectively apply a massive-MIMO technology to the terminal device. Consequently, uplink transmission performance is limited.

Based on this, embodiments of this application provide an uplink precoding indication method, to implement a flexible uplink precoding matrix indicator by predefining a codeword, and adapt to a larger quantity of transmit antenna ports and a larger quantity of uplink transmission layers, so that the uplink transmission performance is effectively improved.

It should be noted that in the descriptions of this application, "predefined" may refer to being defined in a communication protocol and configured in a network device and a terminal device of both communication parties, or may refer to being determined and configured by a network device for a terminal device, where the configuration may be performed explicitly by using signaling or may be performed implicitly by using other information.

In the descriptions of this application, the "indication" may include a direct indication and an indirect indication, or may include an explicit indication and an implicit indication. Information indicated by a piece of information (such as first indication information or second indication information described below) is referred to as to-be-indicated information. In a specific implementation process, there are a plurality of manners of indicating the to-be-indicated information. For example, the to-be-indicated information may be directly indicated, where the to-be-indicated information, an index of the to-be-indicated information, or the like is indicated. For another example, the to-be-indicated information may be indirectly indicated by indicating other information. There is an association relationship between the other information and the to-be-indicated information. For another example, only a part of the to-be-indicated information may be indicated, and the other part of the to-be-indicated information is known, agreed in advance, or can be deduced. In addition, specific information may alternatively be indicated by using a pre-agreed (for example, stipulated in a protocol) arrangement sequence of various pieces of information, to reduce indication overheads to some extent.

The following describes in detail a precoding indication method provided in embodiments of this application.

It should be understood that, for ease of understanding and description, the following describes in detail the method provided in embodiments of this application by using interaction between a terminal device and a network device as an example. However, this should not constitute any limitation on an execution body of the method provided in this application. For example, the terminal device shown in the following embodiments may be replaced with a component (for example, a chip or a chip system) disposed in the terminal device. The network device shown in the following embodiments may be replaced with a component (for example, a chip or a chip system) disposed in the network device.

A specific structure of an execution body of the method provided in embodiments of this application is not specifically limited in the following embodiments, provided that a program that records code of the method provided in embodiments of this application can be run to perform communication according to the method provided in embodiments of this application. For example, the method provided in embodiments of this application may be performed by the terminal device or the network device, or a functional module that can invoke and execute a program in the terminal device or the network device.

For ease of understanding, the following describes a process of an uplink codebook indication method in an existing protocol with reference to FIG. 2.

Step S210: A terminal device sends an uplink reference signal to a network device.

Step S220: The network device sends precoding indication information to the terminal device.

Step S230: The terminal device determines an uplink precoding matrix and sends uplink data.

The uplink reference signal is used by the network device to perform channel measurement. Optionally, the uplink reference signal is an SRS.

The precoding indication information includes the uplink precoding matrix indicator and an uplink transmission rank indicator used by the terminal device.

Then, the terminal device determines an uplink precoding matrix and the quantity of uplink transmission layers based on the precoding indication information, to precode the uplink data.

For example, after performing channel measurement based on the uplink reference signal, the network device obtains uplink channel information of the terminal device, calculates the uplink precoding matrix (a second uplink precoding matrix) and the quantity of uplink transmission layers of the terminal device based on the uplink channel information, and indicates the uplink precoding matrix and the quantity of uplink transmission layers to the terminal device.

It should be noted that when the network device directly indicates the uplink precoding matrix and the quantity of uplink transmission layers to the terminal device, because each element in the uplink precoding matrix is an unquantized continuous value, direct indication overheads are excessively high. Therefore, a quantized uplink precoding codebook (as shown in Table 1 to Table 6) is designed in an existing protocol for indication.

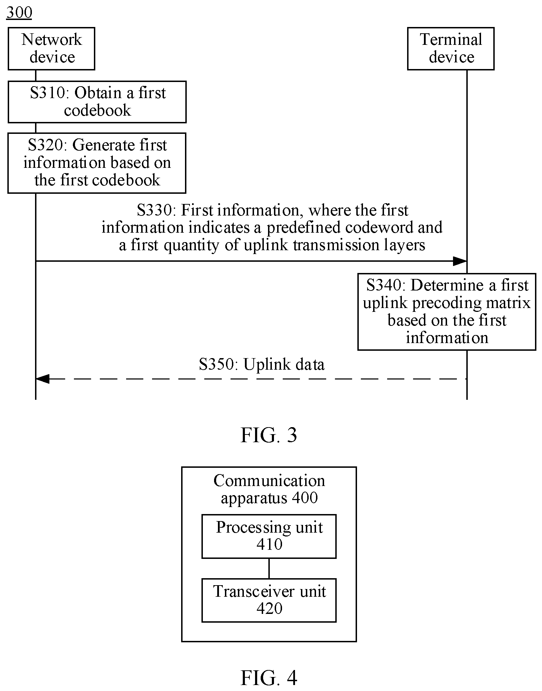

FIG. 3 is a schematic flowchart of a communication method according to an embodiment of this application. FIG. 3 shows the schematic flowchart of the communication method 300 according to an embodiment of this application from a perspective of device interaction. The method 300 shown in FIG. 3 may include S310 to S350. Steps in the method 300 are described below in detail.

S310: A network device obtains a first codebook.

Specifically, the first codebook includes a plurality of predefined codewords, and the plurality of predefined codewords are used by the network device to select a most appropriate codeword based on a second uplink precoding matrix and a quantity of uplink transmission layers, to indicate a terminal device to perform uplink precoding. In other words, the first codebook is used for determining an uplink precoding matrix (referred to as a first uplink precoding matrix below for ease of description) used when the terminal device sends uplink data. The following describes in detail a process of determining the first codebook.

In this application, the first codebook may be defined in a communication protocol, or may be another predefined codebook. In addition, the first codebook is configured in a network device and a terminal device of both communication parties, or may be determined and configured by the network device for the terminal device, where the configuration may be performed explicitly by using signaling or may be performed implicitly by using other information.

In this embodiment of this application, an example in which the predefined codeword is a codeword in a codebook predefined in a 3GPP protocol is used for description. It should be understood that the predefined codeword may be prestored in the network device and the terminal device according to the 3GPP protocol, may be prestored in the network device and sent by the network device to the terminal device after the terminal device accesses a network, or may be prestored in the terminal device and sent by the terminal device to the network device after the terminal device accesses a network. This is not specifically limited in this embodiment of this application.

For example, the network device may estimate, based on a reference signal, for example, an SRS, that is sent by the terminal device and that is used for measuring an uplink channel, a channel condition status of a radio channel between the terminal device and the network device, and determine a quantity of transmit antenna ports used by the terminal device. The network device may obtain the second uplink precoding matrix through calculation based on the channel condition status and the quantity of transmit antenna ports of the terminal device, and determine the quantity of uplink transmission layers corresponding to the second uplink precoding matrix as a quantity of uplink transmission layers of the terminal device. It should be noted that an SRS resource occupied for sending the SRS by the terminal device may be configured by the network device, and a quantity of SRS ports configured in the SRS resource is the same as the quantity of transmit antenna ports used by the terminal device.

Then, the network device may determine, based on the quantity of transmit antenna ports and the quantity of uplink transmission layers of the terminal device, a quantity of transmit antenna ports and a quantity of uplink transmission layers that correspond to each predefined codeword in the first codebook.

In the first codebook, each predefined codeword corresponds to a same quantity of transmit antenna ports, and the quantity of transmit antenna ports corresponding to each predefined codeword is less than the quantity of transmit antenna ports of the terminal device. For example, this embodiment of this application mainly relates to a case in which the quantity of transmit antenna ports of the terminal device is greater than a maximum quantity 4 of transmit antenna ports supported by the codeword predefined in the current 3GPP protocol. For example, the quantity of transmit antenna ports of the terminal device is 8, or is described as 8Tx, and the quantity of transmit antenna ports corresponding to each predefined codeword in the first codebook may be 4. The quantity of uplink transmission layers of the terminal device includes quantities of uplink transmission layers respectively corresponding to predefined codewords, or this may be understood as that the quantities of uplink transmission layers respectively corresponding to the predefined codewords depend on the quantity of uplink transmission layers of the terminal device.

For ease of differentiation, in the following, the quantity of uplink transmission layers of the terminal device is described as a first quantity of uplink transmission layers, and the quantity of uplink transmission layers corresponding to the predefined codeword is described as a second quantity of uplink transmission layers. In other words, one predefined codeword corresponds to one second quantity of uplink transmission layers, and second quantities of uplink transmission layers corresponding to different predefined codewords may be the same or may be different. Specifically, a second quantity of uplink transmission layers corresponding to each predefined codeword in the first codebook is less than or equal to N, where N is a positive integer, and N indicates a maximum quantity of uplink transmission layers corresponding to a quantity of transmit antenna ports corresponding to any predefined codeword in the predefined codewords. For example, in the codebook predefined in the 3GPP TS 38.211 V16.7.0 protocol, a value of N is 4. It may be understood that the first uplink precoding matrix used when the terminal device sends the uplink data corresponds to the first quantity of uplink transmission layers and the quantity of transmit antenna ports of the terminal device.

For example, the terminal device reports a coherent capability of the terminal device to the network device. Correspondingly, the network device obtains the coherent capability of the terminal device. For example, the coherent capability reported by the terminal device may indicate that a plurality of transmit antenna ports of the terminal device are non-coherent, partially coherent, or fully coherent to each other. Optionally, when the coherent capability reported by the terminal device indicates that the plurality of transmit antenna ports of the terminal device are partially coherent to each other, a specific coherent pair may be further indicated. For example, eight transmit antenna ports of the terminal device are denoted as 1 to 8, where {1, 3, 5, 7} is a coherent pair, and indicates that the terminal device may simultaneously send the uplink data through transmit antenna ports 1, 3, 5, and 7. For another example, in the eight transmit antenna ports of the terminal device, {1, 3} is a coherent pair, and {5, 7} is another coherent pair, indicating that the terminal device may simultaneously send the uplink data through transmit antenna ports 1 and 3, and the terminal device may simultaneously send the uplink data through transmit antenna ports 5 and 7.

It should be noted that, if the coherent capability of the terminal device is full coherence, the network device may determine that the plurality of transmit antenna ports corresponding to the first uplink precoding matrix are non-coherent, partially coherent, or fully coherent to each other; if the coherent capability of the terminal device is partial coherence, the network device may determine that the plurality of transmit antenna ports corresponding to the first uplink precoding matrix are non-coherent or partially coherent to each other; or if the coherent capability of the terminal device is non-coherence, the network device may determine that the plurality of transmit antenna ports corresponding to the first uplink precoding matrix are non-coherent to each other. Then, the network device may determine, based on the foregoing second uplink precoding matrix obtained through calculation, that the plurality of transmit antenna ports corresponding to the first uplink precoding matrix used when the terminal device sends the uplink data are non-coherent, partially coherent, or fully coherent to each other.

In this embodiment of this application, an example of the predefined codeword is provided with reference to the following manners.

In a possible implementation, when the quantity of uplink transmission layers (the first quantity of uplink transmission layers) of the terminal device is less than or equal to X (X may be one of 1, 2, 3, and 4), for a manner of determining the first uplink precoding matrix, refer to the following formula (1) for understanding. The network device may determine the predefined codeword according to the following formula (1), to determine the first uplink precoding matrix.

$$\mathbf{P} = \begin{bmatrix} \mathbf{P}_1 \\ \mathbf{0} \end{bmatrix} \quad (1)$$

$\mathbf{P}$ represents the first uplink precoding matrix, [] represents a matrix, and $\mathbf{P}_1$ represents a predefined codeword and is briefly referred to as a first codeword below.

In a possible implementation, when the quantity of uplink transmission layers (the first quantity of uplink transmission layers) of the terminal device is greater than X (X may be any one of 1, 2, 3, and 4), for a manner of determining the first uplink precoding matrix, refer to the following formula (2) for understanding. The network device may determine the predefined codeword according to the following formula (2), to determine the first uplink precoding matrix.

$$\mathbf{P} = \begin{bmatrix} \mathbf{P}_1 & \mathbf{0} \\ \mathbf{0} & \mathbf{P}_2 \end{bmatrix} \quad (2)$$

$\mathbf{P}$ represents the first uplink precoding matrix, [] represents a matrix, $\mathbf{P}_1$ represents a predefined codeword and is briefly referred to as a first predefined codeword or a first codeword below, and $\mathbf{P}_2$ represents another predefined codeword and is briefly referred to as a second codeword below.

In a possible implementation, when the quantity of uplink transmission layers (the first quantity of uplink transmission layers) of the terminal device is less than or equal to X (X may be any one of 1, 2, 3, and 4), for a manner of determining the first uplink precoding matrix, refer to the following formula (3) for understanding. The network device may determine the predefined codeword according to the following formula (3), to determine the first uplink precoding matrix.

$$\mathbf{P} = \begin{bmatrix} \mathbf{P}_1 \\ \varphi \mathbf{P}_2 \end{bmatrix} \quad (3)$$

$\mathbf{P}$ represents the first uplink precoding matrix, [] represents a matrix, $\mathbf{P}_1$ represents a predefined codeword and is briefly referred to as a first predefined codeword or a first codeword below, $\mathbf{P}_2$ represents another predefined codeword and is briefly referred to as a second predefined codeword or a second codeword below, and $\varphi$ represents a first coefficient, where the first coefficient indicates a phase difference between a first half and a second half of transmit antenna ports corresponding to the first uplink precoding matrix **P**. For example, when the quantity of transmit antenna ports corresponding to the first uplink precoding matrix is 8, the first coefficient is a phase difference between 1st four transmit antenna ports and last four transmit antenna ports in eight transmit antenna ports. Specifically, a value of $\varphi$ is determined according to the following formula (4).

$$\varphi = \exp(j\theta), \quad \theta = 0 : \frac{2\pi}{N} : (N-1)\frac{2\pi}{N} \quad (4)$$

In a possible implementation, when the quantity of uplink transmission layers (the first quantity of uplink transmission layers) of the terminal device is less than or equal to X (X may be any one of 1, 2, 3, and 4), for a manner of determining the first uplink precoding matrix, refer to the following formula (5) for understanding. The network device may determine the predefined codeword according to the following formula (5), to determine the first uplink precoding matrix.

$$\mathbf{P} = \begin{bmatrix} \mathbf{P}_1 \\ \varphi\mathbf{P}_1 \end{bmatrix} \quad (5)$$

P represents the first uplink precoding matrix, [] represents a matrix, $\mathbf{P}_1$ represents a predefined codeword and is briefly referred to as a first predefined codeword or a first codeword below, and $\varphi$ represents a first coefficient. For details, refer to the foregoing detailed explanations. Details are not described again. A value of $\varphi$ is determined according to the foregoing formula (4).

In a possible implementation, when the quantity of uplink transmission layers (the first quantity of uplink transmission layers) of the terminal device is greater than X (X may be any one of 1, 2, 3, and 4), for a manner of determining the first uplink precoding matrix, refer to the following formula (6) for understanding. The network device may determine the predefined codeword according to the following formula (6), to determine the first uplink precoding matrix.

$$\mathbf{P} = \begin{bmatrix} \mathbf{P}_1 & \mathbf{P}_2 \\ \varphi\mathbf{P}_1 & -\varphi\mathbf{P}_2 \end{bmatrix} \quad (6)$$

P represents the first uplink precoding matrix, [] represents a matrix, $\mathbf{P}_1$ represents a predefined codeword and is briefly referred to as a first predefined codeword or a first codeword below, $\mathbf{P}_2$ represents a predefined codeword and is briefly referred to as a second predefined codeword or a second codeword below, and $\varphi$ represents a first coefficient. For details, refer to the foregoing detailed explanations. Details are not described again. A value of $\varphi$ is determined according to the foregoing formula (4).

Specifically, the first codeword and the second codeword are selected from codewords whose quantities of uplink transmission layers are 1 to 4. It should be understood that the network device may determine a corresponding codebook, that is, a table in Table 1 to Table 6, in the 3GPPTS 38.211 V16.7.0 protocol based on the quantity of uplink transmission layers and the quantity of transmit antenna ports that correspond to the second uplink precoding matrix. The codebook may be understood as a candidate codebook of the first codeword and the second codeword, and candidate codewords of the first codeword and the second codeword may include some or all codewords in the candidate codebook. The second uplink precoding matrix may be an uplink precoding matrix that is calculated by the network device based on the channel condition status of the radio channel between the network device and the terminal device.

In a possible implementation, the candidate codewords of the first codeword and the second codeword may include all the codewords in the candidate codebook of the first codeword and the second codeword. It may be understood that the candidate codebook corresponding to the first codeword and the second codeword includes a plurality of codewords, and there are a plurality of candidate codewords of the first codeword and the second codeword. For example, in this implementation, the network device considers, by default, that the coherent capability of the terminal device is full coherence. Alternatively, the candidate codewords of the first codeword and the second codeword may include the some codewords in the candidate codebook, and the network device needs to substitute a determined candidate codeword into a formula to calculate whether **P** satisfies the coherent capability of the terminal device. It should be noted that before determining the first codeword and the second codeword, the network device obtains the coherent capability of the terminal device. The coherent capability may be reported by the terminal device to the network device, or may be obtained by the network device in another manner. This is not limited in this application.

S320: The network device generates first information based on the first codebook.

In this application, the first information indicates the predefined codeword and the first quantity of uplink transmission layers.

Specifically, the first information indicates an index of the predefined codeword and the second quantity of uplink transmission layers, so that the terminal device determines the predefined codeword and the first quantity of uplink transmission layers.

In a possible implementation, when the quantity of uplink transmission layers (the first quantity of uplink transmission layers) of the terminal device is less than or equal to X, the first information includes indication information #1 (an example of first indication information) and indication information #3 (an example of third indication information). The indication information #1 indicates an index of the first codeword and the quantity of uplink transmission layers of the first codeword in the formula (1), and the indication information #3 indicates that the first quantity of uplink transmission layers is less than or equal to X.

The first codeword is selected from codewords whose quantities of uplink transmission layers are 1 to 4. For example, if a codeword whose quantities of uplink transmission layers are 1 to 4 is selected by using the joint index indication in Table 7, six bits are needed.

In a possible implementation, when the quantity of uplink transmission layers (the first quantity of uplink transmission layers) of the terminal device is greater than X, the first information includes indication information #1, indication information #2 (an example of second indication information), and indication information #3. The indication information #1 indicates an index of the first codeword and a quantity of uplink transmission layers of the first codeword in the formula (2), the indication information #2 indicates an index of the second codeword and a quantity of uplink transmission layers of the second codeword in the formula (2), and the indication information #3 indicates that the first quantity of uplink transmission layers is greater than X.

The first codeword is selected from codewords whose quantities of uplink transmission layers are 1 to 4. For example, if a codeword whose quantities of uplink transmission layers are 1 to 4 is selected by using the joint index indication in Table 7, six bits are needed.

Because the coherent capability of the antenna port of the terminal device is consistent when any uplink data stream is sent, it needs to be ensured that a coherent capability of the first codeword is the same as that of the second codeword. Based on this feature, the second codeword may not need to be selected from all 4Tx codewords in an existing protocol as the first codeword, but only needs to be selected from codewords that have a same coherent capability as the first codeword, so that overheads are reduced.

For example, it is assumed that the quantity of transmit antenna ports corresponding to the first uplink precoding matrix is 8, and X is 4. When the first codeword is indicated, six bits are needed according to a manner in Table 7 (Table 7.3.1.1.2-2 in the 3GPP TS 38.212 V16.7.0 protocol). Because the terminal may learn of a coherent capability by using the first codeword, classification needs to be performed based on different coherent capabilities, and an association relationship, for example, Table 8 to Table 10, between a joint index and both a codeword index and a quantity of transmission layers is defined. Table 8 represents a case in which codebook subsets are non-coherent, Table 9 represents a case in which codebook subsets are partially coherent, and Table 10 represents a case in which codebook subsets are fully coherent. When the second codeword is indicated, any value in Table 8 to Table 10 is selected based on the coherent capability of the first codeword, and only five bits are needed. This is different from that the six bits are needed for the first codeword. Therefore, overheads are reduced by one bit.

In this application, for a predefined codeword, the network device may identify the predefined codeword by using an index associated with a TPMI of the predefined codeword and a second quantity of uplink transmission rank indicator TRI corresponding to the predefined codeword, that is, identify the predefined codeword through joint indication using the TRI and the TPMI.

Table 8

| Index | Codebook subset=non-coherent |
|---|---|
| 0 | One layer and TPMI=0 |
| ... | ... |
| 3 | One layer and TPMI=3 |
| 4 | Two layers and TPMI=0 |
| ... | ... |
| 9 | Two layers and TPMI=5 |
| 10 | Three layers and TPMI=0 |
| 11 | Four layers and TPMI=0 |

(continued)

| Index | Codebook subset=non-coherent |
|-------|------------------------------|
| 12 to 31 | Reserved |

Table 9

| Index | Codebook subset=partially coherent |
|-------|-------------------------------------|
| 0 | One layer and TPMI=4 |
| ... | ... |
| 7 | One layer and TPMI=11 |
| 8 | Two layers and TPMI=6 |
| ... | ... |
| 15 | Two layers and TPMI=13 |
| 16 | Three layers and TPMI=1 |
| 17 | Three layers and TPMI=2 |
| 18 | Four layers and TPMI=1 |
| 19 | Four layers and TPMI=2 |
| 20 to 31 | Reserved |

Table 10

| Index | Codebook subset=fully coherent |
|-------|---------------------------------|
| 0 | One layer and TPMI=12 |
| ... | ... |
| 15 | One layer and TPMI=27 |
| 16 | Two layers and TPMI=14 |
| ... | ... |
| 23 | Two layers and TPMI=21 |
| 24 | Three layers and TPMI=3 |
| ... | ... |
| 27 | Three layers and TPMI=6 |
| 28 | Four layers and TPMI=3 |
| 29 | Four layers and TPMI=4 |
| 30 and 31 | Reserved |

An index in Table 8 to Table 10 indicates a quantity of uplink transmission layers corresponding to a codeword and a TPMI of the codeword.

In addition, it should be understood that an ellipsis "..." in Table 8 to Table 10 indicates that an index between an index preceding the ellipsis and an index following the ellipsis is omitted. For example, in Table 8, indexes 5 to 8 are omitted between an index 4 and an index 9, where a quantity of layers (or referred to as a quantity of uplink transmission layers) indicated by each of the indexes 5 to 8 is 2, and a TPMI increases in ascending order. To be specific, the index 5 specifically indicates a quantity 2 of layers and a TPMI=1; an index 6 specifically indicates a quantity 2 of layers and a TPMI=2; an index 7 specifically indicates a quantity 2 of layers and a TPMI=3; and the index 8 specifically indicates a quantity 2 of layers and a TPMI=4. Indexes in the following tables have same meanings as those herein, and details are not described again.

For example, assuming that X=4, the first quantity of uplink transmission layers is greater than 4, and the first codeword is selected from the codewords whose quantities of uplink transmission layers are 1 to 4, six bits are needed. Assuming that the first codeword is non-coherent, the network device may determine that the coherent capability of the second codeword is non-coherence. In this case, an index in Table 8 may indicate the second codeword, and only five bits are needed. In comparison with the first codeword, overheads are reduced by one bit.

Further, assuming that the network device determines that the second codeword is a non-coherent codeword with "two layers and TPMI=5", the index may be 9 in Table 8. The network device may include, in the first information, binary bits 01001 corresponding to the index 9. It should be understood that, because a value of the index in Table 8 may be 0 to 31, five bits are needed to represent any index in Table 8. After receiving the first information, the terminal device may query, based on 01001, Table 8 for "two layers and TPMI=5" indicated by the index 9. In this way, the terminal device may obtain the second codeword based on the codeword indicated by the TPMI=5 in the codebook.

The foregoing solution does not change a manner of the joint indication using the TRI and the TPMI in the existing protocol. Therefore, an impact point in the protocol is small, and forward compatibility is strong. In addition, based on a same coherent capability of the first codeword and the second codeword, the association relationship between the joint index and both the codeword index and the quantity of transmission layers is defined. For example, a table index is redesigned based on an existing indication table (Table 7), so that air interface overheads of the indication are reduced.

In a possible implementation, when the quantity of uplink transmission layers (the first quantity of uplink transmission layers) of the terminal device is less than or equal to X, the first information includes indication information #1, indication information #2, indication information #3, and indication information #4. The indication information #1 indicates an index of the first codeword and a quantity of uplink transmission layers of the first codeword in the formula (3), the indication information #2 indicates an index of the second codeword and a quantity of uplink transmission layers of the second codeword in the formula (3), the indication information #3 indicates that the first quantity of uplink transmission layers is less than or equal to X, and the indication information #4 indicates the first coefficient.

The first codeword is selected from codewords whose quantities of uplink transmission layers are 1 to 4. For example, if a codeword whose quantities of uplink transmission layers are 1 to 4 is selected by using the joint index indication in Table 7, six bits are needed.

The second codeword and the first codeword have a same coherent capability and a same quantity of uplink transmission layers. Therefore, the second codeword may be selected only from codewords that have a same coherent capability and a same quantity of uplink transmission layers as the first codeword. In this way, overheads are reduced.

For example, it is assumed that the quantity of transmit antenna ports corresponding to the first uplink precoding matrix is 8, and X is 4. When the second codeword is indicated, classification needs to be performed based on different coherent capabilities, and an association relationship, for example, Table 11 to Table 28, between a joint index and both a codeword index and a quantity of transmission layers is defined. Table 11 and Table 12 represent a case in which codebook subsets are non-coherent and a quantity of uplink transmission layers is 1. Table 13 represents a case in which codebook subsets are non-coherent and a quantity of uplink transmission layers is 2. Table 14 and Table 15 represent a case in which codebook subsets are non-coherent and a quantity of uplink transmission layers is 3. Table 16 and Table 17 represent a case in which codebook subsets are non-coherent and a quantity of uplink transmission layers is 4. Table 18 represents a case in which codebook subsets are partially coherent and a quantity of uplink transmission layers is 1. Table 19 represents a case in which codebook subsets are partially coherent and a quantity of uplink transmission layers is 2. Table 20 and Table 21 represent a case in which codebook subsets are partially coherent and a quantity of uplink transmission layers is 3. Table 22 and Table 23 represent a case in which codebook subsets are partially coherent and a quantity of uplink transmission layers is 4. Table 24 represents a case in which codebook subsets are fully coherent and a quantity of uplink transmission layers is 1. Table 25 and Table 26 represent a case in which codebook subsets are fully coherent and a quantity of uplink transmission layers is 2. Table 27 represents a case in which codebook subsets are fully coherent and a quantity of uplink transmission layers is 3. Table 28 represents a case in which codebook subsets are fully coherent and a quantity of uplink transmission layers is 4.

Table 11

| Index | Codebook subset=non-coherent |
|---|---|
| 0 | One layer and TPMI=0 |
| ... | ... |
| 3 | One layer and TPMI=3 |
| 4 to 7 | Reserved |

Table 12

| Index | Codebook subset=non-coherent |
|---|---|
| 0 | One layer and TPMI=0 |

(continued)

| Index | Codebook subset=non-coherent |
|---|---|
| ... | ... |
| 3 | One layer and TPMI=3 |

Table 13

| Index | Codebook subset=non-coherent |
|---|---|
| 0 | Two layers and TPMI=0 |
| ... | ... |
| 5 | Two layers and TPMI=5 |
| 6 and 7 | Reserved |

Table 14

| Index | Codebook subset=non-coherent |
|---|---|
| 0 | Three layers and TPMI=0 |
| 1 to 7 | Reserved |

Table 15

| Index | Codebook subset=non-coherent |
|---|---|
| 0 | Three layers and TPMI=0 |
| 1 | Reserved |

Table 16

| Index | Codebook subset=non-coherent |
|---|---|
| 0 | Four layers and TPMI=0 |
| 1 to 7 | Reserved |

Table 17

| Index | Codebook subset=non-coherent |
|---|---|
| 0 | Four layers and TPMI=0 |
| 1 | Reserved |

Table 18

| Index | Codebook subset=partially coherent |
|---|---|
| 0 | One layer and TPMI=4 |
| ... | ... |
| 7 | One layer and TPMI=11 |

Table 19

| Index | Codebook subset=partially coherent |
|---|---|
| 0 | Two layers and TPMI=6 |
| ... | ... |

(continued)

| Index | Codebook subset=partially coherent |
|-------|-------------------------------------|
| 7 | Two layers and TPMI=13 |

Table 20

| Index | Codebook subset=partially coherent |
|-------|-------------------------------------|
| 0 | Three layers and TPMI=1 |
| 1 | Three layers and TPMI=2 |
| 2 to 7 | Reserved |

Table 21

| Index | Codebook subset=partially coherent |
|-------|-------------------------------------|
| 0 | Three layers and TPMI=1 |
| 1 | Three layers and TPMI=2 |

Table 22

| Index | Codebook subset=partially coherent |
|-------|-------------------------------------|
| 0 | Four layers and TPMI=1 |
| 1 | Four layers and TPMI=2 |
| 2 to 7 | Reserved |

Table 23

| Index | Codebook subset=partially coherent |
|-------|-------------------------------------|
| 0 | Four layers and TPMI=1 |
| 1 | Four layers and TPMI=2 |

Table 24

| Index | Codebook subset=fully coherent |
|-------|---------------------------------|
| 0 | One layer and TPMI=12 |
| ... | ... |
| 15 | One layer and TPMI=27 |

Table 25

| Index | Codebook subset=fully coherent |
|-------|---------------------------------|
| 0 | Two layers and TPMI=14 |
| ... | ... |
| 7 | Two layers and TPMI=21 |
| 8 to 15 | Reserved |

Table 26

| Index | Codebook subset=fully coherent |
|-------|---------------------------------|
| 0 | Two layers and TPMI=14 |

(continued)

| Index | Codebook subset=fully coherent |
|-------|-------------------------------|
| ... | ... |
| 7 | Two layers and TPMI=21 |

Table 27

| Index | Codebook subset=fully coherent |
|-------|-------------------------------|
| 0 | Three layers and TPMI=3 |
| ... | ... |
| 3 | Three layers and TPMI=6 |

Table 28

| Index | Codebook subset=fully coherent |
|-------|-------------------------------|
| 0 | Four layers and TPMI=3 |
| 1 | Four layers and TPMI=4 |

An index in Table 11 to Table 28 indicates a quantity of uplink transmission layers corresponding to a codeword and a TPMI of the codeword.

For example, assuming that X=4, the first quantity of uplink transmission layers is less than or equal to 4, and the first codeword is selected from the codewords whose quantities of uplink transmission layers are 1 to 4, six bits are needed. Assuming that the quantity of uplink transmission layers of the first codeword is 2, and the coherent capability is assumed to be full coherence, the second codeword may be selected from Table 25, and only four bits are needed. Alternatively, the second codeword may be selected from Table 26, and only three bits are needed.

It should be noted that, in comparison with Table 25, one bit is saved for Table 26 when the second codeword is indicated, and the saved one bit may indicate the first coefficient, to ensure that a total quantity of bits of the first codeword, the second codeword, and the first coefficient is still fixed.

Similarly, for understanding of Table 11 and Table 12, Table 14 and Table 15, Table 16 and Table 17, Table 20 and Table 21, and Table 22 and Table 23, refer to a relationship between Table 26 and Table 25. Details are not described again.

In a possible implementation, when the quantity of uplink transmission layers (the first quantity of uplink transmission layers) of the terminal device is less than or equal to X, the first information includes indication information #1 and indication information #3. The indication information #1 indicates an index of the first codeword and a quantity of uplink transmission layers of the first codeword in the formula (5), and the indication information #3 indicates that the first quantity of uplink transmission layers is less than or equal to X.

In a possible implementation, when the quantity of uplink transmission layers (the first quantity of uplink transmission layers) of the terminal device is greater than X, the first information includes indication information #1, indication information #2, indication information #3, and indication information #4. The indication information #1 indicates an index of the first codeword and a quantity of uplink transmission layers of the first codeword in the formula (6), the indication information #2 indicates an index of the second codeword and a quantity of uplink transmission layers of the second codeword in the formula (6), the indication information #3 indicates that the first quantity of uplink transmission layers is greater than X, and the indication information #4 indicates the first coefficient.

The first information may further include the indication information #4.

The first codeword is selected from codewords whose quantities of uplink transmission layers are 1 to 4. For example, in the 3GPP TS 38.211 V16.7.0 protocol, if a codeword whose quantities of uplink transmission layers are 1 to 4 is selected from a codebook, six bits are needed.

The second codeword and the first codeword have a same coherent capability. Therefore, the second codeword may be selected only from codewords that have a same coherent capability as the first codeword. In this way, overheads are reduced.

For example, it is assumed that the quantity of transmit antenna ports corresponding to the first uplink precoding matrix is 8, and X is 4. When the first codeword is indicated, six bits are needed based on 1st two columns in Table 7 (Table 7.3.1.1.2-2 in the 3GPP TS 38.212 V16.7.0 protocol). When the second codeword is indicated, because the terminal may learn of a coherent capability by using the first codeword, classification needs to be performed based on different coherent capabilities, and an association relationship between a joint index and both a codeword index and a quantity of transmission layers is defined. For a case in which codebook subsets are partially coherent, refer to Table 9. For a case in which codebook subsets are fully coherent, refer to Table 10. For a case in which codebook subsets are non-coherent, refer to Table 29.

Table 29

| Index | Codebook subset=non-coherent |
|---|---|
| 0 | One layer and TPMI=0 |
| ... | ... |
| 3 | One layer and TPMI=3 |
| 4 | Two layers and TPMI=0 |
| ... | ... |
| 9 | Two layers and TPMI=5 |
| 10 | Three layers and TPMI=0 |
| 11 | Four layers and TPMI=0 |
| 12 to 15 | Reserved |

An index in Table 29 indicates a quantity of uplink transmission layers corresponding to a codeword and a TPMI of the codeword.

For example, assuming that X=4, the first quantity of uplink transmission layers is greater than 4, and the first codeword is selected from the codewords whose quantities of uplink transmission layers are 1 to 4, six bits are needed. Assuming that the first codeword is non-coherent, the network device may determine that the coherent capability of the second codeword is non-coherence. In this case, an index in Table 29 may indicate the second codeword, and only four bits are needed. In comparison with the first codeword, overheads are reduced by two bits.

In a possible implementation, when the quantity of uplink transmission layers (the first quantity of uplink transmission layers) of the terminal device is greater than 4, the first codeword or the second codeword may be selected only from codewords whose quantity of uplink transmission layers is 4.

For example, when the second codeword is selected from the codewords whose quantity of uplink transmission layers is 4, an indication table of the second codeword may be further designed, and the second codeword only needs to be selected from codewords whose coherent capability is the same as that of the first codeword and whose quantity of layers is 4, so that indication overheads are further reduced.

For example, it is assumed that the quantity of transmit antenna ports corresponding to the first uplink precoding matrix is 8, and X is 4. When the second codeword is indicated, codewords whose quantities of transmission layers are 4 need to be classified based on different coherent capabilities, as shown in Table 30 to Table 32. Table 30 represents a case in which codebook subsets are non-coherent, Table 31 represents a case in which codebook subsets are partially coherent, and Table 32 represents a case in which codebook subsets are fully coherent. It can be learned that only one bit is needed when the following Table 30 to Table 32 are used for indication, so that overheads are greatly reduced.

Table 30

| Index | Codebook subset=non-coherent |
|---|---|
| 0 | Four layers and TPMI=0 |
| 1 | Reserved |

Table 31

| Index | Codebook subset=partially coherent |
|---|---|
| 0 | Four layers and TPMI=1 |
| 1 | Four layers and TPMI=2 |

Table 32

| Index | Codebook subset=fully coherent |
|---|---|
| 0 | Four layers and TPMI=3 |
| 1 | Four layers and TPMI=4 |

An index in Table 30 to Table 32 indicates a quantity of uplink transmission layers corresponding to a codeword and a TPMI of the codeword.

For example, assuming that when the first quantity of uplink transmission layers is greater than 4, the first codeword is selected from the codewords whose quantities of uplink transmission layers are 1 to 4, six bits are needed; and assuming that the coherent capability of the first codeword is full coherence, the second codeword is selected from a fully coherent codeword whose quantity of uplink transmission layers is 4. That is, the second codeword may be selected from Table 32, and only one bit is needed, so that overheads are reduced by five bits.

It should be noted that the association relationship between the joint index and both the codeword index and the quantity of transmission layers defined in the table (for example, any one of Table 8 to Table 32) defined in this application needs to be predefined in a protocol, and is stored in a network device and a terminal device of both communication parties.

By way of example, and not limitation, the first information may be carried in DCI.

The indication information #1 and the indication information #2 each may be any value field in the DCI. For example, the field may be a Precoding information and number of layers field. The field may jointly indicate the index of the first codeword, and corresponds to a TPMI 1 and a TRI 1.

The indication information #3 may be understood as that one bit is added to the DCI, and the added bit indicates that the first quantity of uplink transmission layers is greater than X, or less than or equal to X.

For example, when a value of the bit is 0, it indicates that the quantity of uplink transmission layers of the terminal device is less than or equal to X; or when a value of the bit is 1, it indicates that the quantity of uplink transmission layers of the terminal device is greater than X.

In this application, the first coefficient $\varphi$ may be indicated by using any value field in the DCI.

For example, $\log_2 N$ bits may be added to the DCI to indicate a value of $\varphi$.

Optionally, a sum of a quantity of bits occupied by the indication information #1, a quantity of bits occupied by the indication information #2, and a quantity of bits indicating $\varphi$ is a first value. To avoid increasing blind detection burden on the terminal device, the first value is a fixed bit length value.

The first value may be predefined in a protocol. This is not limited in this embodiment of this application.

Optionally, in an understanding, the quantity of bits may change according to the quantity of layers and the coherent capability of the first codeword, but it needs to be ensured that the total quantity of bits is fixed.

For example, it is assumed that the first quantity of uplink transmission layers is less than or equal to 4, the first codeword is selected from the codewords whose quantities of uplink transmission layers are 1 to 4, the quantity of uplink transmission layers of the first codeword is 2, and the coherent capability is assumed to be full coherence. In this case, the second codeword is selected from Table 26, and three bits are needed. When the quantity of uplink transmission layers of the first codeword is 3, and the coherent capability is assumed to be partial coherence, the second codeword is selected from Table 20, and three bits are needed. The second codeword may also be selected from Table 21, and one bit is needed. In this case, the remaining two bits may indicate the first coefficient, to ensure that the total quantity of bits is fixed.

S330: The network device sends the first information to the terminal device.

The network device sends the first information to the terminal device, and correspondingly, the terminal device receives the first information from the network device.

S340: The terminal device determines the first uplink precoding matrix based on the first information.

Specifically, the terminal device determines a predefined codeword in the first uplink precoding matrix and the second quantity of uplink transmission layers based on indication of the first information, to determine the first uplink precoding matrix and the first quantity of uplink transmission layers.

In a possible implementation, the terminal device determines, based on the indication information #3 in the first information, that the first quantity of uplink transmission layers is less than or equal to X, and the terminal device determines the first codeword and the quantity of uplink transmission layers of the first codeword based on the index of the first codeword indicated by the indication information #1 in the first information, to determine the first uplink precoding matrix corresponding to the formula (1).

In a possible implementation, the terminal device determines, based on the indication information #3 in the first information, that the first quantity of uplink transmission layers is greater than X, the terminal device determines the first codeword, the quantity of uplink transmission layers of the first codeword, and the coherent capability of the first codeword based on the index of the first codeword indicated by the indication information #1 in the first information, and the terminal device determines the second codeword and the quantity of uplink transmission layers of the second codeword based on the index of the second codeword indicated by the indication information #2 in the first information and the coherent capability of the first codeword, to determine the first uplink precoding matrix corresponding to the formula (2).

In a possible implementation, the terminal device determines, based on the indication information #3 in the first information, that the first quantity of uplink transmission layers is less than or equal to X, the terminal device determines the first codeword, the quantity of uplink transmission layers of the first codeword, and the coherent capability of the first codeword based on the index of the first codeword indicated by the indication information #1 in the first information, the terminal device determines the second codeword and the quantity of uplink transmission layers of the second codeword based on the index of the second codeword indicated by the indication information #2 in the first information, the coherent capability of the first codeword, and the quantity of uplink transmission layers of the first codeword, and the terminal device determines a value of $\varphi$ based on a phase difference value indicated by the indication information #4 in the first information, to determine the first uplink precoding matrix corresponding to the formula (3).

In a possible implementation, the terminal device determines, based on the indication information #3 in the first information, that the first quantity of uplink transmission layers is less than or equal to X, the terminal device determines the first codeword and the quantity of uplink transmission layers of the first codeword based on the index of the first codeword indicated by the indication information #1 in the first information, and the terminal device determines a value of $\varphi$ based on a phase difference value indicated by the indication information #4 in the first information, to determine the first uplink precoding matrix corresponding to the formula (5).

In a possible implementation, the terminal device determines, based on the indication information #3 in the first information, that the first quantity of uplink transmission layers is greater than X, the terminal device determines the first codeword, the quantity of uplink transmission layers of the first codeword, and the coherent capability of the first codeword based on the index of the first codeword indicated by the indication information #1 in the first information, the terminal device determines the second codeword and the quantity of uplink transmission layers of the second codeword based on the index of the second codeword indicated by the indication information #2 in the first information and the coherent capability of the first codeword, and the terminal device determines a value of $\varphi$ based on a phase difference value indicated by the indication information #4 in the first information, to determine the first uplink precoding matrix corresponding to the formula (6).

The first quantity of uplink transmission layers is equal to a sum of the quantity of uplink transmission layers of the first codeword and the quantity of uplink transmission layers of the second codeword.

S350: The terminal device sends the uplink data based on the first uplink precoding matrix.

Specifically, after determining the first uplink precoding matrix, the terminal device may send the uplink data based on the first uplink precoding matrix.

According to the foregoing technical solutions, in this embodiment, an 8Tx fully coherent codebook and an 8Tx partially coherent codebook are enabled based on a 4Tx codebook in the existing protocol, and an 8Tx codebook does not need to be designed. A manner in which the TPMI and the quantity of uplink transmission rank indicator are used for joint indication in the existing protocol is not changed, so that impact on the existing protocol is reduced and backward compatibility is enhanced. Further, based on a same coherent capability of the predefined codeword, the association relationship between the joint index and both the codeword index and the quantity of transmission layers is defined, so that overheads are reduced.

FIG. 4 is a block diagram of a communication apparatus according to an embodiment of this application. As shown in FIG. 4, the communication apparatus 400 includes a transceiver unit 420 and a processing unit 410. The transceiver unit 420 may be configured to implement a corresponding communication function, and the processing unit 410 may be configured to process data.

Optionally, the transceiver unit 420 may also be referred to as a communication interface or a communication unit, and includes a sending unit and/or a receiving unit. The transceiver unit 420 may be a transceiver (including a transmitter and/or a receiver), an input/output interface (including an input interface and/or an output interface), a pin, a circuit, or the like. The transceiver unit 420 may be configured to perform a sending step and/or a receiving step in the foregoing method embodiments.

Optionally, the processing unit 410 may be a processor (which may include one or more processors), a processing circuit having a processor function, or the like, and may be configured to perform a step other than sending and receiving in the foregoing method embodiments.

Optionally, the apparatus 400 further includes a storage unit. The storage unit may be a memory, an internal storage unit (for example, a register or a cache), an external storage unit (for example, a read-only memory or a random access memory), or the like. The storage unit is configured to store instructions. The processing unit 410 executes the instructions stored in the storage unit, to enable the communication apparatus to perform the foregoing methods.

In a design, the apparatus 400 may be configured to perform an action performed by the network device in the foregoing method embodiments. For example, the apparatus 400 may be configured to perform an action performed by the network device in the foregoing method 400. In this case, the apparatus 400 may be a component of the network device. The transceiver unit 420 is configured to perform an operation related to receiving and sending of the network device in the foregoing method, and the processing unit 410 is configured to perform a processing-related operation of the network device in the foregoing method embodiments.

Specifically, the processing unit 410 is configured to obtain a first codebook; the processing unit 410 is further configured to determine first information when a quantity of uplink transmission layers of a terminal device is less than or equal to X, where the first information includes first indication information and third indication information, the first indication information indicates an index of a first codeword in the first codebook and a quantity of uplink transmission layers of the first codeword, and the third indication information indicates that the quantity of uplink transmission layers of the terminal device is less than or equal to X; or the processing unit 410 is further configured to determine first information when a quantity of uplink transmission layers of a terminal device is greater than X, where the first information includes first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that the quantity of uplink transmission layers of the terminal device is greater than X, and the second codeword and the first codeword have a same coherent capability; and the transceiver unit 420 is configured to send the first information, where the first information is used by the terminal device to determine an uplink precoding matrix, and X is any one of 1, 2, 3, and 4.

It should be understood that the transceiver unit 420 and the processing unit 410 may further perform other operations performed by the network device in the method 300. Details are not described herein again.

In a design, the apparatus 400 may be configured to perform an action performed by the terminal device in the foregoing method embodiments. For example, the apparatus 400 may be configured to perform an action performed by the terminal device in the foregoing methods 800 and 900. In this case, the apparatus 400 may be a component of the terminal device. The transceiver unit 420 is configured to perform an operation related to receiving and sending of the terminal device in the foregoing method, and the processing unit 410 is configured to perform a processing-related operation of the terminal device in the foregoing method embodiments.

Specifically, the processing unit 410 is configured to obtain a first codebook; the transceiver unit 420 is configured to receive first information, where the first information includes first indication information and third indication information, the first indication information indicates an index of a first codeword in the first codebook and a quantity of uplink transmission layers of the first codeword, and the third indication information indicates that a quantity of uplink transmission layers of the terminal device is less than or equal to X; or the transceiver unit 420 is configured to receive first information, where the first information includes first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that a quantity of uplink transmission layers of the terminal device is greater than X, and the second codeword and the first codeword have a same coherent capability; and the processing unit 410 is further configured to determine an uplink precoding matrix based on the first information, where X is any one of 1, 2, 3, and 4.

It should be understood that the transceiver unit 420 and the processing unit 410 may further perform other operations performed by the terminal device in the method 300. Details are not described herein again.

It should be further understood that the apparatus 400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 400 may be specifically the network device in the foregoing embodiments, and may be configured to perform procedures and/or steps corresponding to the network device in the foregoing method embodiments. To avoid repetition, details are not described herein again.

The apparatus 400 in each of the foregoing solutions has functions of implementing the corresponding steps performed by the terminal device in the foregoing methods, or the apparatus 400 in each of the foregoing solutions has functions of implementing the corresponding steps performed by the network device in the foregoing methods. The functions may be implemented by hardware, or may be implemented by executing corresponding software by hardware. The hardware or software includes one or more modules corresponding to the foregoing functions. For example, a transceiver module may be replaced with a transceiver (for example, a sending unit in the transceiver module may be replaced with a transmitter, and a receiving unit in the transceiver module may be replaced with a receiver), and another unit like a processing module may be replaced with a processor, to respectively perform sending and receiving operations and a related processing operation in the method embodiments.

In addition, the transceiver unit 420 may alternatively be a transceiver circuit (for example, may include a receiving circuit and a sending circuit), and the processing module may be a processing circuit.

It should be noted that the apparatus in FIG. 4 may be the network element or the device in the foregoing embodiments, or may be a chip or a chip system, for example, a system on chip (system on chip, SoC). The transceiver module may be an input/output circuit or a communication interface. The processing module is a processor, a microprocessor, or an integrated circuit integrated on the chip. This is not limited herein.

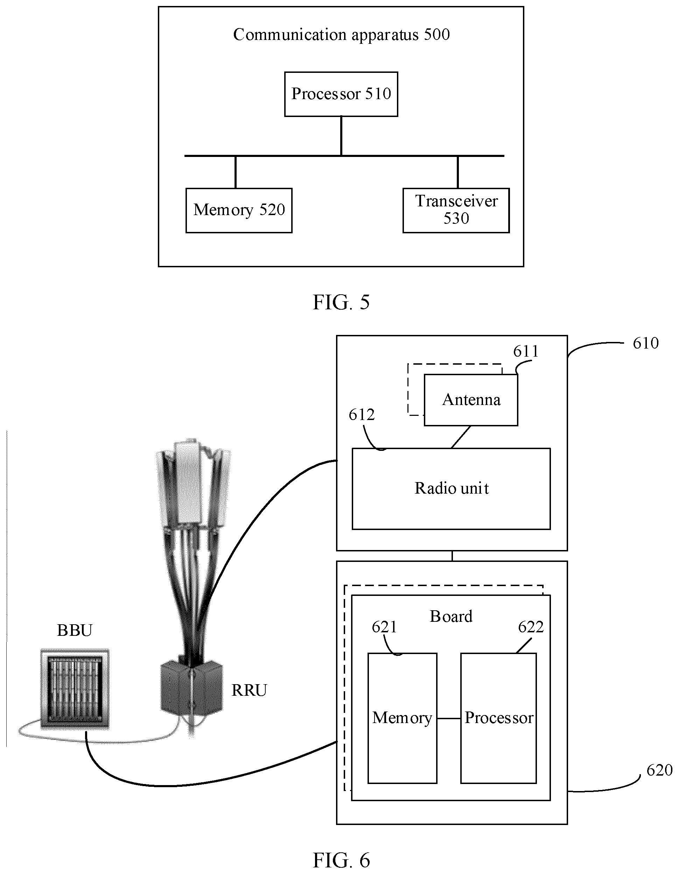

FIG. 5 is a diagram of a communication architecture according to an embodiment of this application. A communication apparatus 500 shown in FIG. 5 includes a processor 510, a memory 520, and a transceiver 530. The processor 510 is coupled to the memory 520, and is configured to execute instructions stored in the memory 520, to control the transceiver 530 to send a signal and/or receive a signal.

It should be understood that the processor 510 and the memory 520 may be integrated into one processing apparatus. The processor 510 is configured to execute program code stored in the memory 520, to implement the foregoing functions. During specific implementation, the memory 520 may alternatively be integrated into the processor 510, or may be independent of the processor 510. It should be understood that the processor 510 may alternatively correspond to each processing unit in the foregoing communication apparatus, and the transceiver 530 may correspond to each receiving unit and sending unit in the foregoing communication apparatus.

It should be further understood that the transceiver 530 may include a receiver (or referred to as a receiver machine) and a transmitter (or referred to as a transmitter machine). The transceiver may further include an antenna. There may be one or more antennas. The transceiver may alternatively be a communication interface or an interface circuit.

Specifically, the communication apparatus 500 may correspond to the terminal device and the network device in the method 700 and the method 800 according to embodiments of this application. It should be understood that a specific process in which the units perform the foregoing corresponding steps is described in detail in the foregoing method embodiments, and for brevity, details are not described herein.

When the communication apparatus 500 is a chip, the chip includes an interface unit and a processing unit. The interface unit may be an input/output circuit or a communication interface. The processing unit may be a processor, a microprocessor, or an integrated circuit integrated on the chip.

When the apparatus in this embodiment of this application is a network device, the apparatus may be shown in FIG. 6. The apparatus may include one or more radio units, such as a remote radio unit (remote radio unit, RRU) 610 and one or more baseband units (baseband units, BBUs) (which may also be referred to as a digital unit (digital unit, DU)) 620. The RRU 610 may be referred to as a transceiver module. The transceiver module may include a sending module and a receiving module, or the transceiver module may be a module that can implement sending and receiving functions. The transceiver module may correspond to a transceiver unit 420 in FIG. 4. That is, the transceiver module may perform an action performed by the transceiver unit 420. Optionally, the transceiver module may also be referred to as a transceiver machine, a transceiver circuit, a transceiver, or the like, and may include at least one antenna 611 and a radio unit 612. The RRU 610 is mainly configured to: receive and send a radio frequency signal and perform conversion between a radio frequency signal and a baseband signal. The BBU 620 part is mainly configured to perform baseband processing, control a base station, and the like. The RRU 610 and the BBU 620 may be physically disposed together, or may be physically disposed separately, that is, a distributed base station. With development of antenna technologies, the RRU may also evolve into an active antenna unit (active antenna unit, AAU).

The BBU 620 is a control center of the base station, may also be referred to as a processing module, may correspond to the processing unit 410 in FIG. 4, and is mainly configured to complete baseband processing functions, such as channel coding, multiplexing, modulation, and spectrum spreading. In addition, the processing module may perform an action performed by the processing unit 410. For example, the BBU (processing module) may be configured to control the base station to perform an operation procedure related to the network device in the foregoing method embodiments.

In an example, the BBU 620 may include one or more boards, and a plurality of boards may jointly support a radio access network (for example, an LTE network) of a single access standard, or may separately support radio access networks (for example, an LTE network, a 5G network, or another network) of different access standards. The BBU 620 further includes a memory 621 and a processor 622. The memory 621 is configured to store instructions and data that are necessary. The processor 622 is configured to control the base station to perform a necessary action, for example, configured to control the base station to perform an operation procedure related to the network device in the foregoing method embodiments. The memory 621 and the processor 622 may serve the one or more boards. In other words, a memory and a processor may be disposed on each board. Alternatively, a plurality of boards may share a same memory and a same processor. In addition, a necessary circuit may further be disposed on each board.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the

foregoing method in combination with the hardware in the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the foregoing method in combination with the hardware in the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, terms such as "example" or "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that the names of various nodes and messages are limited in this application. On the contrary, any name that has a same or similar function as the node or the message used in this application is considered as a method or an equivalent replacement in this application, and falls within the protection scope of this application.

It should be further understood that, in this application, both "when" and "if" mean that UE or a base station performs corresponding processing in an objective situation, but do not constitute any limitation on time, do not require the UE or the base station to perform a determining action during implementation, and do not mean another limitation either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, or A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An uplink precoding indication method, comprising:

obtaining a first codebook;
determining first information when a quantity of uplink transmission layers of a terminal device is less than or equal to X, wherein the first information comprises first indication information and third indication information, the first indication information indicates an index of a first codeword in the first codebook and a quantity of uplink transmission layers of the first codeword, and the third indication information indicates that the quantity of uplink transmission layers of the terminal device is less than or equal to X; or

determining first information when a quantity of uplink transmission layers of a terminal device is greater than X, wherein the first information comprises first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that the quantity of uplink transmission layers of the terminal device is greater than X, and the second codeword and the first codeword have a same coherent capability; and

sending the first information, wherein the first information is used by the terminal device to determine an uplink precoding matrix, and X is any one of 1, 2, 3, and 4.

2. The method according to claim 1, wherein when the quantity of uplink transmission layers of the terminal device is less than or equal to X, the first information further comprises fourth indication information, the fourth indication information indicates a first coefficient, and the first coefficient indicates a phase difference between a first half and a second half of transmit antenna ports corresponding to the uplink precoding matrix.

3. The method according to claim 2, wherein the first information further comprises second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

4. The method according to claim 1, wherein when the quantity of uplink transmission layers of the terminal device is greater than X, the first information further comprises fourth indication information, the fourth indication information indicates a first coefficient, and the first coefficient indicates a phase difference between a first half and a second half of transmit antenna ports corresponding to the uplink precoding matrix.

5. The method according to any one of claims 1 to 4, wherein the first codeword and the second codeword are selected from codewords whose quantities of uplink transmission layers are 1 to 4.

6. The method according to claim 1, wherein when the quantity of uplink transmission layers of the first terminal device is greater than 4, the second codeword or the first codeword is selected from codewords whose quantity of uplink transmission layers is 4.

7. The method according to any one of claims 1 to 6, wherein a sum of indication bit overheads of the first codeword, the second codeword, and the coefficient is a first value.

8. An uplink precoding indication method, comprising:

obtaining a first codebook;

receiving first information, wherein the first information comprises first indication information and third indication information, the first indication information indicates an index of a first codeword in the first codebook and a quantity of uplink transmission layers of the first codeword, and the third indication information indicates that a quantity of uplink transmission layers of the terminal device is less than or equal to X; or

receiving first information, wherein the first information comprises first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that a quantity of uplink transmission layers of the terminal device is greater than X, and the second codeword and the first codeword have a same coherent capability; and

determining an uplink precoding matrix based on the first information, wherein X is any one of 1, 2, 3, and 4.

9. The method according to claim 8, wherein when the third indication information indicates that the quantity of uplink transmission layers of the terminal device is less than or equal to X, the first information further comprises fourth indication information, the fourth indication information indicates a first coefficient, and the first coefficient indicates a phase difference between a first half and a second half of transmit antenna ports corresponding to the uplink precoding matrix.

10. The method according to claim 9, wherein the first information further comprises second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

11. The method according to claim 8, wherein when the third indication information indicates that the quantity of uplink transmission layers of the terminal device is greater than X, the first information further comprises fourth indication information, the fourth indication information indicates a first coefficient, and the first coefficient indicates a phase difference between a first half and a second half of transmit antenna ports corresponding to the uplink precoding matrix.

12. The method according to any one of claims 8 to 11, wherein the first codeword and the second codeword are selected from codewords whose quantities of uplink transmission layers are 1 to 4.

13. The method according to claim 8, wherein when the quantity of uplink transmission layers of the first terminal device is greater than 4, the second codeword or the first codeword is selected from codewords whose quantity of uplink transmission layers is 4.

14. The method according to any one of claims 8 to 13, wherein a sum of indication bit overheads of the first codeword, the second codeword, and the coefficient is a first value.

15. A communication apparatus, comprising:

a processing unit, configured to obtain a first codebook, wherein
the processing unit is configured to determine first information when a quantity of uplink transmission layers of a terminal device is less than or equal to X, wherein the first information comprises first indication information and third indication information, the first indication information indicates an index of a first codeword in the first codebook and a quantity of uplink transmission layers of the first codeword, and the third indication information indicates that the quantity of uplink transmission layers of the terminal device is less than or equal to X; or
the processing unit is configured to determine first information when a quantity of uplink transmission layers of a terminal device is greater than X, wherein the first information comprises first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that the quantity of uplink transmission layers of the terminal device is greater than X, and the second codeword and the first codeword have a same coherent capability; and
a transceiver unit, configured to send the first information, wherein the first information is used by the terminal device to determine an uplink precoding matrix, and X is any one of 1, 2, 3, and 4.

16. The apparatus according to claim 15, wherein when the quantity of uplink transmission layers of the terminal device is less than or equal to X, the first information further comprises fourth indication information, the fourth indication information indicates a first coefficient, and the first coefficient indicates a phase difference between a first half and a second half of transmit antenna ports corresponding to the uplink precoding matrix.

17. The apparatus according to claim 16, wherein the first information further comprises second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

18. The apparatus according to claim 15, wherein when the quantity of uplink transmission layers of the terminal device is greater than X, the first information further comprises fourth indication information, the fourth indication information indicates a first coefficient, and the first coefficient indicates a phase difference between a first half and a second half of transmit antenna ports corresponding to the uplink precoding matrix.

19. The apparatus according to any one of claims 15 to 18, wherein the first codeword and the second codeword are selected from codewords whose quantities of uplink transmission layers are 1 to 4.

20. The apparatus according to claim 15, wherein when the quantity of uplink transmission layers of the first terminal device is greater than 4, the second codeword or the first codeword is selected from codewords whose quantity of uplink transmission layers is 4.

21. The apparatus according to any one of claims 15 to 20, wherein a sum of indication bit overheads of the first codeword, the second codeword, and the coefficient is a first value.

22. A communication apparatus, comprising:

   a processing unit, configured to obtain a first codebook; and
   a transceiver unit, configured to receive first information, wherein the first information comprises first indication information and third indication information, the first indication information indicates an index of a first codeword in the first codebook and a quantity of uplink transmission layers of the first codeword, and the third indication information indicates that a quantity of uplink transmission layers of the terminal device is less than or equal to X; or
   the transceiver unit, configured to receive first information, wherein the first information comprises first indication information, second indication information, and third indication information, the first indication information indicates an index of a first codeword in the first codebook and a quantity of uplink transmission layers of the first codeword, the second indication information indicates an index of a second codeword in the first codebook and a quantity of uplink transmission layers of the second codeword, the third indication information indicates that a quantity of uplink transmission layers of the terminal device is greater than X, and the second codeword and the first codeword have a same coherent capability, wherein
   the processing unit is further configured to determine an uplink precoding matrix based on the first information, wherein X is any one of 1, 2, 3, and 4.

23. The apparatus according to claim 22, wherein when the third indication information indicates that the quantity of uplink transmission layers of the terminal device is less than or equal to X, the first information further comprises fourth indication information, the fourth indication information indicates a first coefficient, and the first coefficient indicates a phase difference between a first half and a second half of transmit antenna ports corresponding to the uplink precoding matrix.

24. The apparatus according to claim 23, wherein the first information further comprises second indication information, the second indication information indicates an index of a second codeword in the first codebook and a quantity of uplink transmission layers of the second codeword, the quantity of uplink transmission layers of the first codeword is the same as the quantity of uplink transmission layers of the second codeword, and the second codeword and the first codeword have a same coherent capability.

25. The apparatus according to claim 22, wherein when the third indication information indicates that the quantity of uplink transmission layers of the terminal device is greater than X, the first information further comprises fourth indication information, the fourth indication information indicates a first coefficient, and the first coefficient indicates a phase difference between a first half and a second half of transmit antenna ports corresponding to the uplink precoding matrix.

26. The apparatus according to any one of claims 22 to 25, wherein the first codeword and the second codeword are selected from codewords whose quantities of uplink transmission layers are 1 to 4.

27. The apparatus according to claim 22, wherein when the quantity of uplink transmission layers of the first terminal device is greater than 4, the second codeword or the first codeword is selected from codewords whose quantity of uplink transmission layers is 4.

28. The apparatus according to any one of claims 22 to 27, wherein a sum of indication bit overheads of the first codeword, the second codeword, and the coefficient is a first value.

29. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 7, or perform the method according to any one of claims 8 to 14.

30. A computer-readable storage medium, wherein the computer-readable storage medium stores a computer program or instructions, and when the computer program or the instructions are run on a computer, the computer is enabled to perform the method according to any one of claims 1 to 7, or the method according to any one of claims 8 to 14.

31. A chip system, comprising a processor, configured to invoke a computer program from a memory and run the computer program, to enable a communication device on which the chip system is installed to perform the method according to any one of claims 1 to 7, or perform the method according to any one of claims 8 to 14.

32. A computer program product, wherein when the computer program product runs on a computer, the computer is enabled to perform the steps of the method according to any one of claims 1 to 7, or perform the steps of the method according to any one of claims 8 to 14.

FIG. 1

FIG. 2

300

```
┌──────────┐                              ┌──────────┐
│ Network  │                              │ Terminal │
│ device   │                              │ device   │
└──────────┘                              └──────────┘
```

S310: Obtain a first
codebook

S320: Generate first
information based on
the first codebook

S330: First information, where the first
information indicates a predefined codeword and
a first quantity of uplink transmission layers

S340: Determine a first
uplink precoding matrix
based on the first
information

S350: Uplink data

FIG. 3

Communication
apparatus 400

Processing unit
410

Transceiver unit
420

FIG. 4

Communication apparatus 500

Processor 510

Memory 520

Transceiver 530

FIG. 5

611

610

Antenna

612

Radio unit

BBU

RRU

Board

621

622

Memory

Processor

620

FIG. 6

## INTERNATIONAL SEARCH REPORT

| International application No. |
| --- |
| **PCT/CN2023/118738** |

| A. | CLASSIFICATION OF SUBJECT MATTER |
| --- | --- |

H04B7/0456(2017.01)i; H04W72/21(2023.01)i

According to International Patent Classification (IPC) or to both national classification and IPC

| B. | FIELDS SEARCHED |
| --- | --- |

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 码本, 码书, 码字, 上行, 层数, 秩, 预编码, 指示, 索引, 大于, 多于, 少于, 小于, 相干, codebook, codeword, uplink, layer, rank, precode, indicate, index, more than, less than, coherent

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 102255705 A (CHINA ACADEMY OF TELECOMMUNICATIONS TECHNOLOGY) 23 November 2011 (2011-11-23) description, paragraphs 127-145 | 1-32 |
| A | CN 108809386 A (HUAWEI TECHNOLOGIES CO., LTD.) 13 November 2018 (2018-11-13) entire document | 1-32 |
| A | US 2021143874 A1 (LG ELECTRONICS INC.) 13 May 2021 (2021-05-13) entire document | 1-32 |
| A | WO 2022153395 A1 (NTT DOCOMO INC.) 21 July 2022 (2022-07-21) entire document | 1-32 |
| A | HUAWEI et al. "Codebook based transmission for UL MIMO" *3GPP TSG RAN WG1 NR Ad Hoc Meeting R1-1710447*, 17 June 2017 (2017-06-17), entire document | 1-32 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 November 2023** | **08 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/118738**

| Patent document cited in search report | | | Publication date (day/month/year) | Patent family member(s) | | | Publication date (day/month/year) |
|---|---|---|---|---|---|---|---|
| CN | 102255705 | A | 23 November 2011 | CN | 102255705 | B | 04 September 2013 |
| CN | 108809386 | A | 13 November 2018 | EP | 3637631 | A4 | 15 April 2020 |
| | | | | EP | 3637631 | A1 | 03 November 2021 |
| | | | | EP | 4037196 | A1 | 03 August 2022 |
| | | | | WO | 2018202154 | A1 | 08 November 2018 |
| | | | | US | 2022173774 | A1 | 02 June 2022 |
| | | | | US | 2020099423 | A1 | 26 March 2020 |
| | | | | US | 11206064 | B2 | 21 December 2021 |
| | | | | CN | 108809386 | B | 16 June 2023 |
| | | | | EP | 3637631 | B1 | 03 November 2021 |
| | | | | IN | 201947049997 | A | 13 December 2019 |
| US | 2021143874 | A1 | 13 May 2021 | WO | 2018231008 | A1 | 20 December 2018 |
| | | | | US | 11211977 | B2 | 28 December 2021 |
| WO | 2022153395 | A1 | 21 July 2022 | | None | | |

Form PCT/ISA/210 (patent family annex) (July 2022)

**EP 4 583 421 A1**

**Patent documents cited in the description**

- CN 202211168758